# EUROPEAN PATENT SPECIFICATION

(11) **EP 3 699 759 B1**
(45) Date of publication and mention of the grant of the patent: **21.06.2023**
(21) Application number: 20157989.3
(22) Date of filing: 18.02.2020
(51) Int. Cl.: G06F 9/46, G06F 16/23, G06F 16/25

(54) **ELECTRONIC DEVICE AND METHOD FOR MANAGING DATABASE**
ELEKTRONISCHE VORRICHTUNG UND VERFAHREN ZUR VERWALTUNG EINER DATENBANK
DISPOSITIF ÉLECTRONIQUE ET PROCÉDÉ DE GESTION DE BASE DE DONNÉES

(30) Priority: 19.02.2019 KR 20190019540
(43) Date of publication of application: 26.08.2020
(73) Proprietor: Samsung Electronics Co., Ltd., Gyeonggi-do 16677 (KR)
(72) Inventor: Lee, Kisung, 16677 Gyeonggi-do (KR); Jun, Hyeeun, 16677 Gyeonggi-do (KR); Song, Kiwon, 16677 Gyeonggi-do (KR)
(74) Representative: Arnold & Siedsma

(56) References cited:
- US-A1- 2017 371 916

## Description

### BACKGROUND

### 1) Field

The disclosure relates to an electronic device for managing a database storing data related to applications and a method of operating the same.

### 2) Description of Related Art

With the recent development of digital technology, various types of electronic devices, such as mobile communication terminals, smart phones, tablet personal computers (PCs), electronic organizers, personal digital assistants (PDA), wearable devices, and the like, are widely used. The electronic device may manage data of one or more applications, services, and/or an operating system using a database. For example, the electronic device may process data in a database, based on a running application, service, and/or operating system.

The above information is presented as background information only to assist with an understanding of the disclosure. No determination has been made, and no assertion is made, as to whether any of the above might be applicable as prior art with regard to the disclosure.

US 2017/0371916 describes a database management device, in which a first write manager writes data for which a write instruction has been issued from a client to a first storage area of a storage unit. A second write manager writes WAL data corresponding to the write instruction from the client to any address in a second storage area of the storage unit. A determiner determines whether or not to write the WAL data to the second storage area for each transaction process. A transaction manager causes the first write manager to write the data and causes the second write manager to write the WAL data if the determiner determines to write the WAL data and causes the first write manager to write the data if the determiner determines not to write the WAL data.

### SUMMARY

Aspects of the disclosure are to address at least the above-mentioned problems and/or disadvantages and to provide at least the advantages described below. Accordingly, an aspect of the disclosure is to provide an electronic device for managing a database storing data related to applications and a method of operating the same.

In the case where the database cannot to be opened normally, one or more applications, services, and/or an operating system may not operate normally. For example, if the electronic device fails to normally open the database in response to a request by an application and/or a service, the application and/or the service cannot be performed normally. Since the application and/or the service cannot be performed normally, there may be errors in relation to the application and/or the service, which may interrupt the operation of a device for the application and/or the service.

Technical problems to be solved by the various embodiments of the disclosure are not limited to the above-mentioned technical problems, and those skilled in the art to which the disclosure pertains may clearly understand other technical problems not mentioned above from the description below.

Additional aspects will be set forth in part in the description which follows and, in part, will be apparent from the description, or may be learned by practice of the presented embodiments.

The invention relates to an electronic device, as further defined in claim 1, and a method, as further defined in claim 9, for managing a database.

Effects which can be acquired by the disclosure are not limited to the above described effects, and other effects that have not been mentioned may be clearly understood by those skilled in the art from the following description.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2 is a block diagram 200 illustrating a program 140 according to an embodiment of the disclosure;
FIG. 3A is a diagram illustrating the configuration of an electronic device and at least one file related to a database stored in the electronic device according to an embodiment of the disclosure;
FIG. 3B is a diagram illustrating the configuration of an electronic device and at least one file related to a database stored in the electronic device according to an embodiment of the disclosure;
FIG. 4 is a flowchart illustrating the operation of an electronic device according to an embodiment of the disclosure;
FIG. 5 is a diagram illustrating a database stored in a storage of an electronic device and at least one file related to the database according to an embodiment of the disclosure;
FIG. 6 is a flowchart illustrating an operation in which an electronic device identifies the state of at least one file related to a database according to an embodiment of the disclosure;
FIG. 7 is a flowchart illustrating an operation in which an electronic device produces a second file in a memory according to an embodiment of the disclosure;
FIG. 8A is a diagram illustrating an operation in which an electronic device stores a file, which stores mapping information, in a memory according to an embodiment of the disclosure;
FIG. 8B is a diagram illustrating an operation in which an electronic device stores a file, which stores mapping information, in a memory according to an embodiment of the disclosure;
FIG. 9 is a flowchart illustrating an operation in which an electronic device processes transactions identified from an application and/or a service according to an embodiment of the disclosure;
FIG. 10A is a diagram illustrating an example of the structure of a database in an electronic device according to an embodiment of the disclosure;
FIG. 10B is a diagram illustrating an example of the structure of a first file according to an embodiment of the disclosure;
FIG. 10C is a diagram illustrating an example of the structure of a second file according to an embodiment of the disclosure;
FIG. 11 is a flowchart illustrating an operation performed by an electronic device in the state in which there is not any file used for access to a database according to an embodiment of the disclosure;
FIG. 12 is a flowchart illustrating an operation performed by an electronic device according to an embodiment of the disclosure;
FIG. 13 is a flowchart illustrating an operation performed by an electronic device according to an embodiment of the disclosure; and
FIG. 14 is a flowchart illustrating an operation performed by an electronic device according to an embodiment of the disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have," "may have," "include" and "comprise," or "may include" and "may comprise" used herein indicate existence of corresponding features (for example, elements such as numeric values, functions, operations, or components) and do not preclude the presence of additional features.

In the disclosure disclosed herein, the expressions "A or B," "at least one of A or/and B," or "one or more of A or/and B," and the like may include all possible combinations of the items enumerated together. For example, "A or B," "at least one of A and B," or "at least one of A or B" may refer to all of the case (1) where at least one A is included, the case (2) where at least one B is included, or the case (3) where both of at least one A and at least one B are included.

As used herein, such terms as "1st" and "2nd," or "first" and "second" may be used to simply distinguish a corresponding component from another, and does not limit the components in other aspect (e.g., importance or order). For example, "a first user device" and "a second user device" indicate different user devices regardless of the order or priority. For example, without departing from the scope of the disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to another element or coupled with/to or connected to another element via an intervening element (for example, a third element). In contrast, when an element (for example, a first element) is referred to as being "directly coupled with/to" or "directly connected to" another element (for example, a second element), it should be understood that there is no intervening element (for example, a third element) between the element and another element.

According to the situation, the term "configured to (or set to)" used in the disclosure may be interchangeably used with the terms "suitable for," "having the capacity to," "designed to," "adapted to," "made to," or "capable of". The term "configured to (or set to)" must not mean only "specifically designed to" in hardware. Instead, the expression "a device configured to" may mean that the device is "capable of" operating together with another device or other components. For example, "a processor configured (set) to perform A, B, and C" may refer, for example, and without limitation, to a dedicated processor (for example, an embedded processor) for performing a corresponding operation, or a generic-purpose processor (for example, a central processing unit (CPU) or an application processor (AP)), or the like, for performing corresponding operations by executing one or more software programs stored in a memory device.

Terms used in the disclosure are used to describe specified embodiments and are not intended to limit the scope of other embodiments. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal way, unless expressly so defined herein in various embodiments of the disclosure. In some cases, even if terms are terms which are defined in the disclosure, they may not be interpreted to exclude embodiments of the disclosure.

An electronic device according to various embodiments of the disclosure may include at least one of, for example, smartphones, tablet personal computers (PCs), mobile phones, video telephones, electronic book readers, desktop PCs, laptop PCs, netbook computers, workstations, servers, personal digital assistant (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable devices may include at least one of accessories (for example, watches, rings, bracelets, ankle bracelets, necklaces, glasses, contact lenses, head-mounted-devices (HMDs), etc.), fabric- or clothing-mounted devices (for example, electronic apparels), body-mounted devices (for example, skin pads, tattoos, etc.), or bio-implantable circuits.

According to some embodiments, the electronic devices may be home appliances. The home appliances include at least one of, for example, televisions (TVs), digital video disk (DVD) players, audios, refrigerators, air conditioners, cleaners, ovens, microwave ovens, washing machines, air cleaners, set-top boxes, home automation control panels, security control panels, TV boxes (for example, Samsung HomeSync^{™}, Apple TV^{™}, or Google TV^{™}), game consoles (for example, Xbox^{™} and PlayStation^{™}), electronic dictionaries, electronic keys, camcorders, or electronic picture frames.

According to another embodiment, the electronic devices may include at least one of medical devices (for example, various portable medical measurement devices (for example, a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, global navigation satellite systems (GNSS), event data recorders (EDRs), flight data recorders (FDRs), vehicle infotainment devices, electronic equipment for vessels (for example, navigation systems and gyrocompasses), avionics, security devices, head units for vehicles, industrial or home robots, automatic teller's machines (ATMs) of financial institutions, points of sales (POSs) of stores, or internet of things (for example, light bulbs, various sensors, electricity or gas meters, sprinkler devices, fire alarms, thermostats, street lamps, toasters, exercise equipment, hot water tanks, heaters, boilers, or the like).

According to an embodiment, the electronic devices may include at least one of furniture, a part of buildings/structures, electronic boards, electronic signature receiving devices, projectors, or various measuring instruments (for example, water meters, electricity meters, gas meters, or wave meters). In various embodiments, the electronic devices may be one or a combination of two or more devices of the above-mentioned devices. According to a certain embodiment, the electronic device may be a flexible electronic device or a foldable electronic device. Also, the electronic devices according to various embodiments of the disclosure are not limited to the above-mentioned devices, and may include new electronic devices according to technology development.

In the disclosure, the term "user" may refer to a person who uses the electronic device or a device that uses the electronic device (for example, an artificial intelligence electronic device).

Hereinafter, various embodiments will be described in detail with reference to the accompanying drawings. However, dimensions of elements in the drawings may be exaggerated or reduced for convenience of explanation. For example, sizes and thicknesses of respective elements shown in the drawings are arbitrarily illustrated for convenience of explanation, and thus the disclosure should not be limited to the illustrations of the drawings.

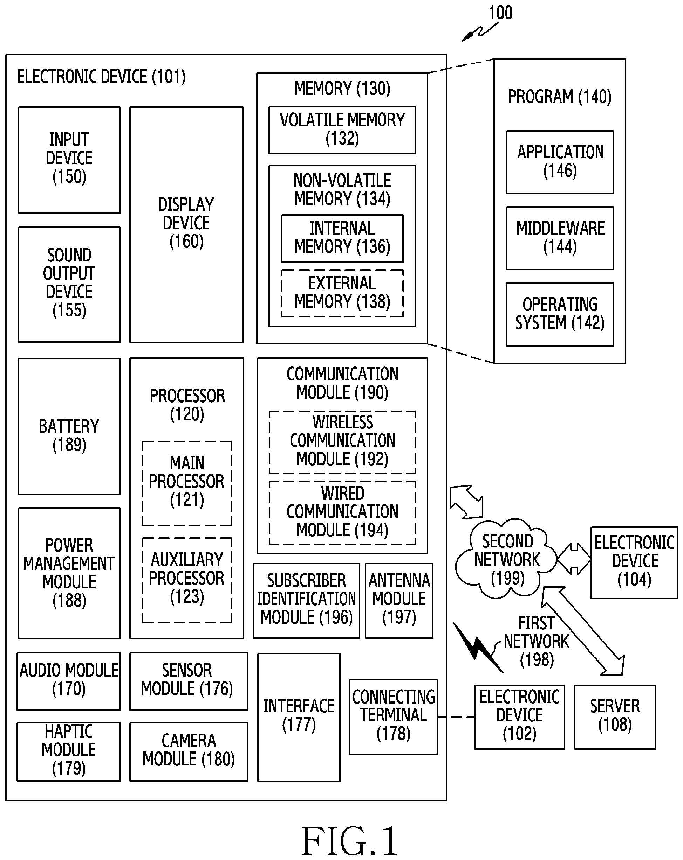

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by another component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

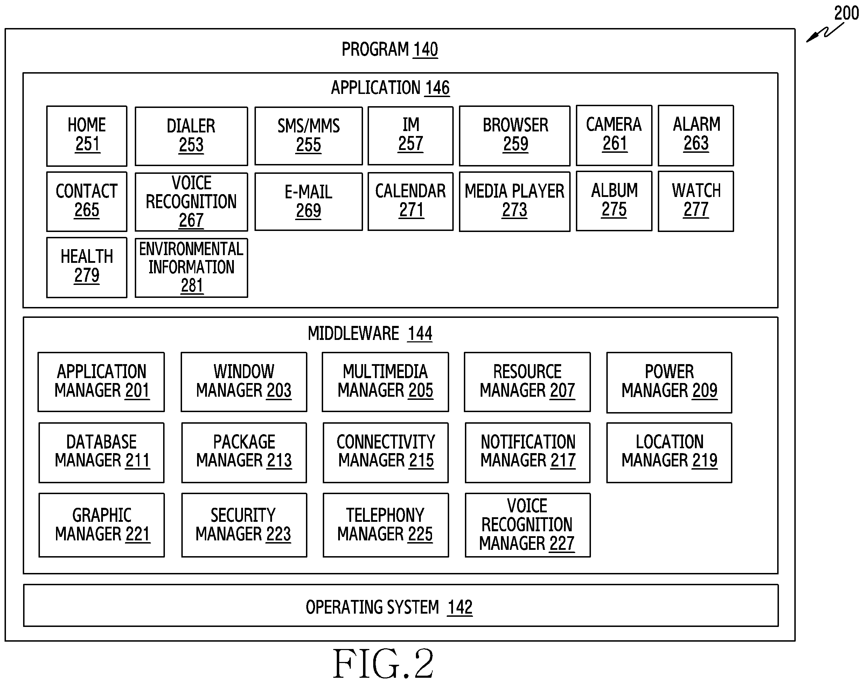

FIG. 2 is a block diagram 200 illustrating the program 140 according to an embodiment of the disclosure.

Referring to FIG. 2, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input device 150, the sound output device 155, the display device 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130. The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 144 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display device or a camera module of the external electronic device). The device management application, additionally or alternatively, may support installation, delete, or update of an application running on the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

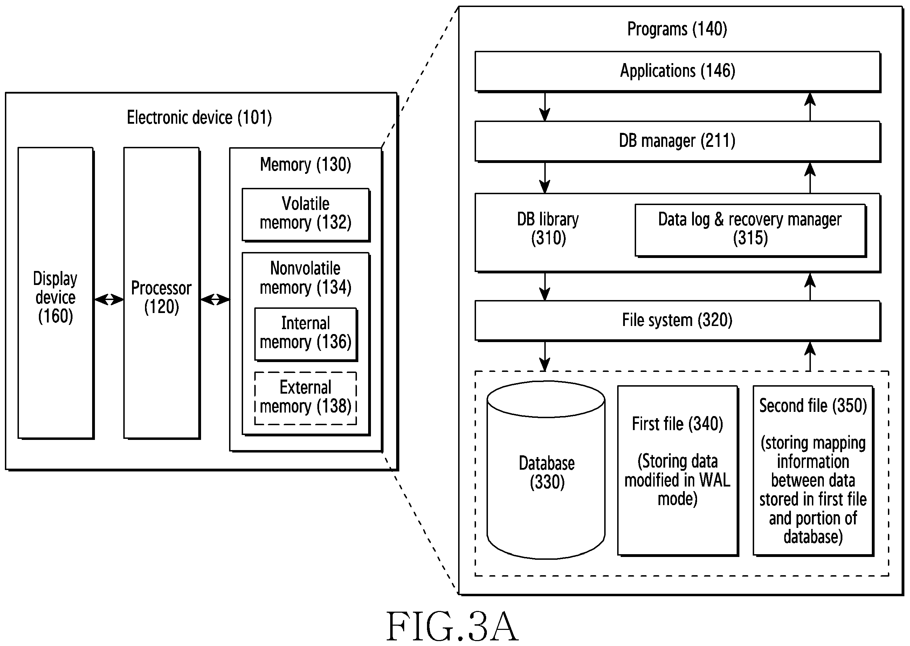

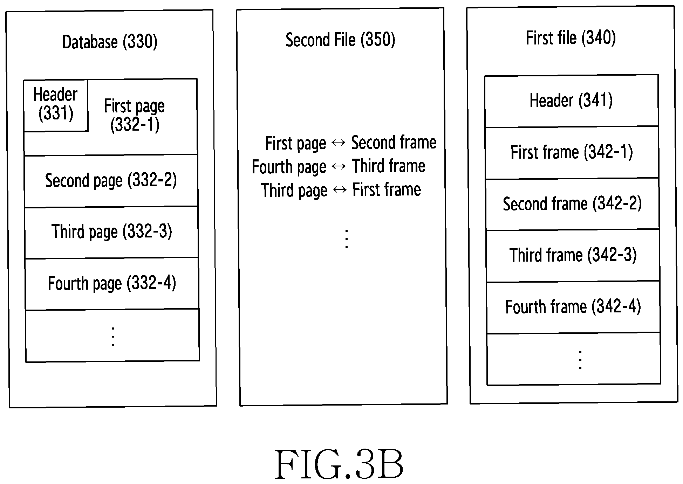

FIG. 3A is a diagram illustrating the configuration of an electronic device 101 and at least one file related to a database 330 stored in the electronic device 101 according to an embodiment of the disclosure, and FIG. 3B is a diagram illustrating the configuration of an electronic device 101 and at least one file related to a database 330 stored in the electronic device 101 according to an embodiment of the disclosure. The electronic device 101 may correspond to at least one of a smartphone, a smart pad, a tablet PC, a personal digital assistant (PDA), a laptop PC, or a desktop PC. The electronic device 101 may correspond to a wearable device including at least one of an accessory type wearable device {e.g., a watch, a ring, a bracelet, an anklet, a necklace, eyeglasses, a contact lens, or a head-mounted-device (HMD)}, a textile or clothing type wearable device (e.g., electronic clothing), a body attachment type wearable device (e.g., a skin pad or a tattoo), or a transplant type wearable device (e.g., an implantable circuit). The electronic device 101 may be a home appliance such as a refrigerator, a television, a cleaner, an air-conditioner, a washing machine, and a lighting device. The electronic device 101 may include a processor 120, a memory 130, and a display device 160. The electronic device 101 may be, at least in part, identical to the electronic device 101 shown in FIG. 1.

According to various embodiments, the processor 120 may execute one or more instructions stored in the memory 130. The processor 120 may include a circuit for processing data, for example, at least one of an integrated circuit (IC), an arithmetic logic unit (ALU), a field programmable gate array (FPGA), and a large scale integration (LSI). The memory 130 may store data related to the electronic device 101. The memory 130 may include a volatile memory 132 such as random access memory (RAM) including static random access memory (SRAM), dynamic RAM (DRAM), or the like, or may include a nonvolatile memory 134, such as flash memory, an embedded multi-media card (eMMC), a solid state drive (SSD), or the like, as well as read-only memory (ROM), magnetoresistive RAM (MRAM), spin-transfer torque MRAM (STT-MRAM), phase-change RAM (PRAM), resistive RAM (RRAM), and ferroelectric RAM (FeRAM). The nonvolatile memory 134 may be in the form of an internal memory 136 included in the electronic device 101 and/or in the form of an external memory 138 detachable from the electronic device 101.

According to various embodiments, the memory 130 may store instructions related to applications and instructions related to an operating system (OS) (e.g., the operating system 142 in FIG. 1). The operating system may be system software executed by the processor 120. The processor 120 may manage hardware components (e.g., the memory 130 in FIG. 1 to the antenna module 197 in FIG. 1) included in the electronic device 101 by executing the operating system. The operating system may provide application programming interfaces (APIs) to applications other than system software.

According to various embodiments, one or more applications 146, which are a set of a plurality of instructions, may be installed in the memory 130. The installation of the application 146 means that the application 146 is stored in a format executable by the processor 120 connected to the memory 130.

According to various embodiments, the display device 160 may visually output information to a user using at least one of an organic light-emitting diode (OLED), a liquid crystal display (LCD), and a light-emitting diode (LED). In order to more intuitively control a user interface (UI) output through the display device 160, the electronic device 101 may include a touch screen panel (TSP) (not shown) disposed on the display device 160. The touch sensor panel may detect the position of an object (e.g., a user's finger, a stylus, or the like) that touches the display device 160 or hovers over the display device 160 using at least one of a resistive film, capacitive components, surface acoustic waves, and infrared rays.

Referring to FIG. 3A, a block diagram of programs 140 according to various embodiments is shown. The programs 140 may include an operating system or middleware for controlling one or more resources of the electronic device 101, or applications 146 executable under the operating system. The operating system may include, for example, Android^{™}, iOS^{™}, Windows^{™}, Symbian^{™}, Tizen^{™}, or Bada^{™}. For example, at least some of the programs 140 may be preloaded to the electronic device 101 at the time of manufacturing, or may be downloaded or updated from an external electronic device (e.g., an external electronic device and/or a server) when a user uses the same.

According to various embodiments, the program 140 may include a database (DB) manager 211 and/or a DB library 310 that provides a function of processing data between the applications 146 and the database 330. The DB library 310 may be included in the middleware (e.g., the middleware 144 in FIGS. 1 and 2). The middleware may provide various functions to the applications 146 such that functions or information provided from one or more resources of the electronic device 101, such as the database 330, can be used by the applications 146. The electronic device 101 may produce, retrieve, or modify the database 330 by the applications 146, based on the DB manager 211 and/or the DB library 310.

According to various embodiments, the DB library 310 may include a data log & recovery manager 315 for managing modified data of the database 330 based on the applications 146 and detecting an error related to the modification of the data, thereby restoring the data. For example, in the case where a function of processing or modifying data of the database 330, which is included in the DB library 310, is executed based on the application 146 running in the electronic device 101, the electronic device 101 may access the data included in the database 330 via a file system 320. When the data is transferred from the file system 320 to the application 146, the electronic device 101 may ensure consistency and/or integrity of the data, based on the data log & recovery manager 315.

The electronic device 101 according to various embodiments may manage data stored in a storage using, for example, the nonvolatile memory 134, based on the file system 320. For example, the electronic device 101 may manage the position at which data (e.g., a file) is stored in the database 330 using the file system 320. The file system 320 may be included in the operating system 142. The electronic device 101 may configure at least a part of the volatile memory 132 and/or the nonvolatile memory 134 of the memory 130 as a storage. The storage may correspond to a storage area in which data related to the electronic device 101 is stored. Hereinafter, the memory may mean a part of the volatile memory 132 and/or the nonvolatile memory 134, which is different from the storage area. For example, the memory may correspond to a work area for processing data related to the electronic device 101. The electronic device 101 according to various embodiments may manage data related to the applications 146, based on the database 330. The database 330 is a set of systematized data, and may refer to a set of data stored in a storage, based on a specified list or data structure. Almost all applications and services installed in the electronic device 101 may operate based on the database 330. In this case, a plurality of different applications and services may frequently access the database 330 while the electronic device 101 is operating. The number of databases 330 stored in the storage of the electronic device 101 is not limited to the embodiment illustrated in FIG. 3, and a plurality of databases may be provided.

According to various embodiments, in order for the electronic device 101 to execute the applications 146 without errors, the electronic device 101 may ensure data integrity for maintaining the data stored in the database 330 in a normal state and atomicity of the transactions related to the database 330. The atomicity may mean that the results of computing data in the database 330, based on all operations included in one transaction, are all reflected to the database 330 or are not reflected to the database 330 at all.

According to various embodiments, the transaction may indicate a unit of an operation performed to modify the state of the database 330. In an embodiment, the transaction is a logical unit of work (LUW) for operations related to data in the database 330, which may be a unit of interaction between the applications 146 and the database 330. An operation related to data in the database 330 may denote an operation of accessing the database 330, based on, for example, a structured query language (SQL) such as "OPEN", "SELECT" "INSERT", "DELETE", "UPDATE", and "CLOSE". In an embodiment, one transaction may be a set of one or more operations and/or SQLs related to data in the database 330. In an embodiment, the operations included in the transaction and related to data in the database 330 may include an operation of reading data, an operation of adding data, an operation of deleting data, and an operation of modifying data. The commitment of the transaction may mean that all operations related to data, which are included in the transaction, have been successfully performed.

The electronic device 101 according to various embodiments may ensure the integrity and atomicity of data in the database 330, based on the DB manager 211 and/or the data log & recovery manager 315. For example, the electronic device 101 may manage the modified data of the database 330, based on a journal scheme, thereby ensuring the integrity and atomicity of data in the database 330. The journal scheme may include a write-ahead logging (WAL) scheme and/or a roll-back scheme. In an embodiment, the electronic device 101, based on the journal scheme related to the database 330, may produce at least one file related to modified data of the database 330 (a first file 340 and/or a second file 350 in FIG. 3A or 3B).

The WAL scheme may be a method in which a result of processing data of the database 330 is stored in a file (e.g., the first file 340), which is different from at least one file included in the database 330, according to transactions and the database 330 is modified according to a specified time and/or a specified condition, based on the result stored in the file. Even if an error occurs while processing data in the database 330 according to transactions, the error may not affect the data in the database 330. The roll-back scheme is a journal scheme of a database, which is different from the WAL scheme, and may denote a method of directly processing data of the database, based on a transaction identified from an application. In the roll-back scheme, in response to an error of the transaction, the electronic device may restore and/or roll back the data in the database to the state prior to processing the data, based on the transaction.

In an embodiment, the electronic device 101 may produce at least one file for storing the added, deleted, and/or modified data of the database 330 according to transactions, based on the WAL scheme, before storing data in the database 330 according to transactions and/or before deleting and/or modifying data stored in the database 330 according to transactions. The electronic device 101 may store the data of the database 330, which is modified based on transactions, in the at least one produced file. The electronic device 101 may modify the database 330, based on the data modified according to the transaction and stored in the at least one file, in the state in which a specified condition related to the at least one file is satisfied.

The first file 340 is a file produced by the electronic device 101, based on the WAL scheme, and may indicate the file (e.g., a WAL file) for storing data of the database 330 modified based on transactions. Even if an error occurs in the first file 340 while the data of the database 330 modified based on the transaction is stored in the first file 340, the error may not affect the data in the database 330. Since the error does not affect the data in the database 330, the electronic device 101 may maintain data in a normal state in the database 330. Since the data in the database 330 remains in the normal state, the electronic device 101 may secure the integrity of the data in the database 330.

The second file 350 may be a file (e.g., a WAL index file) that stores mapping information between the result stored in the first file 340 and a portion of the database 330. In an embodiment, the mapping information may indicate the portion of the database 330 in which the result stored in the first file 340 is to be included. For example, the mapping information may be intended to match the modified data stored in the first file 340 to the position of a portion of the database 330 related to the data. The data stored in the database 330 may be managed based on, for example, a page unit having a specified size (for example, a size of 512 bytes to 64 MB). The first file 340 may store data of the database 330 modified according to transactions, based on the frame unit having a size of a page (for example, a size obtained by combining the size of the page and the size of a frame header). The mapping information stored in the second file 350 may indicate a frame of the first file 340 storing data and a page of the database 330 corresponding to the data.

In an embodiment, the electronic device 101 may search for a hash table included in the mapping information of the second file 350, based on an identifier of the page (for example, a page number) of the database 330, thereby identifying a portion of the first file 340 (e.g., a frame) corresponding to the page having the identifier. For example, the electronic device 101 may identify a frame number of the first file 340 corresponding to a specific page number. The second file 350 may include a portion related to information for preventing multiple transactions from accessing the database 330 at the same time and/or for controlling the same (e.g., lock information such as file lock). The above parameter may be used to prevent errors that may occur when multiple transactions concurrently access the database 330.

In an embodiment, the electronic device 101 may include a database 330 based on SQLite. The electronic device 101 may ensure atomicity of transactions by accessing the database 330 based on SQLite according to the WAL scheme. In an embodiment, the electronic device 101 may ensure the processing of the data in the database 330, based on the applications 146, in the state in which at least one file (e.g., the first file 340 and/or the second file 350) used for access to the database 330 is not available.

FIG. 3B is a diagram illustrating an example for describing the structures of the database 330, the first file 340, and the second file 350 shown in FIG. 3A. For example, the database 330, the first file 340, and the second file 350 may be based on the file system 330 in FIG. 3A, and may be stored in the storage corresponding at least in part to the nonvolatile memory 134. The database 330, the first file 340, and the second file 350 may be different from one another, based on different extensions, in a file system related to the storage (e.g., the file system 320 in FIG. 3A). For example, at least one file related to the database 330 may have an extension ".db", the first file 340 storing the result of processing data in the database 330, based on an operation identified from an application, may have an extension ".db-wal", and the second file 350 storing mapping information between the result stored in the first file 340 and at least a portion of the database 330 may have an extension ".db-shm".

In an embodiment, at least one file related to the database 330 may include at least one page. For example, the sizes of respective ones of the plurality of files related to the database 330 may be, for example, 4 KB or more, which is the size of a page. The size of each of the plurality of files may be changed to another value different from the size of the page by the file system 330 and/or the DB manager 211.

A first page 332-1 of the database 330 may include a database schema. In an embodiment, the first page 332-1 of the database 330 may include a header 331 of the database 330. The header 331 may include a plurality of parameters representing attributes of the database 330. In an embodiment, the pages (e.g., a second page 332-2 to a fourth page 332-4) other than the first page 332-1 of the database 330 may have data structures for faster retrieval of data from the database 330.

In an embodiment, the first file 340 may store the data modified based on the transactions in a WAL mode. The data included in the first file 340 may be distinguished in units of frames. The size of the frame may correspond to a combination of the size of the page and the size of the frame header, which are used to distinguish the data and/or information included in the database 330.

Referring to FIG. 3B, the first file 340 may include a header 341 and a plurality of frames (a first frame 342-1 to a fourth frame 342-4). According to an embodiment, the electronic device 101 may determine whether or not to modify data in the database 330, based on the result stored in the first file 340, according to the size of the first file 340 and/or the number of frames included in the first file 340.

In an embodiment, the second file 350 may be used to identify the portion, the file, or the position of the database 330, in which the modified data of the database 330 stored in the first file 340 is located. The second file 350 may include a parameter (e.g., lock information) to prevent concurrent access to the data in the database 330. The information, which is stored in the second file 350, for matching the modified data of the database 330 stored in the first file 340 to a portion of the database 330 may be referred to as "mapping information". For example, the electronic device 101 may identify that the first page 332-1 of the database 330 is matched to the second frame 342-2 of the first file 340 using the mapping information. The electronic device 101 may identify that the fourth page 332-4 is matched to the third frame 342-3 and that the third page 332-3 is matched to the first frame 342-1, based on the second file 350.

The mapping information may be used when the electronic device 101 modifies data in the database 330, based on the first file 340. For example, the electronic device 101 may modify the first page 332-1 of the database 330, based on the data stored in the second frame 342-2 of the first file 340, may modify the fourth page 332-4 of the database 330, based on the data stored in the third frame 342-3, and may modify the third page 332-3 of the database 330, based on the data stored in the first frame 342-1. An operation in which the electronic device 101 modifies the data of the database 330, based on the first file 340, may be referred to as "merging of the database 330".

In the state in which it is impossible to access data in the database 330 using the first file 340 and the second file 350 due to various errors, since the application 146 cannot process data, based on the database 330, execution of the application 146 may be interrupted (e.g., forcibly terminated). The electronic device 101 according to various embodiments may ensure execution of a read operation related to the data of the database 330 (e.g., ensure the execution of a read operation by opening the database 330) in the state in which it is impossible to access data in the database 330 using the first file 340 and the second file 350 due to various errors, thereby ensuring minimal operation of the application 146 and/or access to the database 330. Since the electronic device 101 ensures the minimal operation of the application 146 and/or access to the database 330, the execution of the application 146 may not be interrupted and forced termination may be prevented.

In the case where it is impossible to access data in the database 330 using the first file 340 and the second file 350 due to various errors occurring during a booting process, the booting of the electronic device 101 may not be completed normally. The electronic device 101 may prevent an error in the operation required to complete booting by ensuring execution of a read operation related to data in the database 330. For example, the electronic device 101 may open the database 330 to ensure execution of the read operation, based on a read-only mode and/or a roll-back operation mode. After the errors are resolved, the electronic device 101 according to various embodiments may resume executing various operations including the read operation related to the data in the database 330.

Errors that disrupt access to the data in the database 330 using the first file 340 and the second file 350 may include an error that makes it impossible to produce first file 340 and/or the second file 350 while opening the database 330. The errors may include an error in which a read operation on at least one file related to the database 330 is not allowed. If a read operation on at least one file related to the database 330 is not allowed, the execution of the application 146 performing the read operation may be stopped (e.g., an application crash).

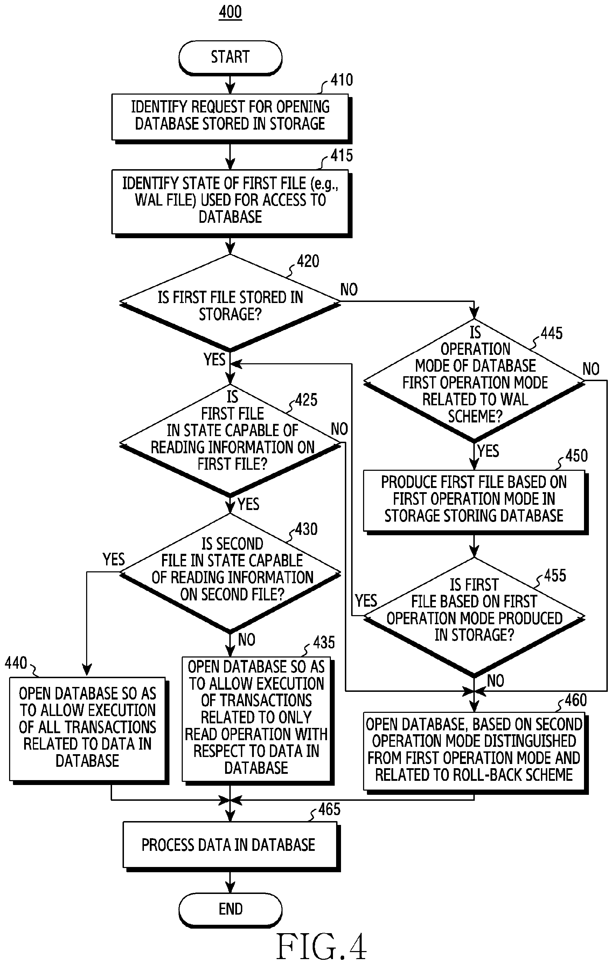

The errors may include, for example, an ENOSPC error (in the case where the storage capacity in the database 330 is low), an EROFS error (in the case where a partition of the storage storing the database 330 is mounted in read-only mode), an ENOMEM error (in the case where the capacity of a memory is not sufficient), an EACCES error (the error of permission related to the database 330), and an disk input/output (I/O) error. Hereinafter, an operation performed by the electronic device 101 according to various embodiments in response to the errors will be described with reference to FIG. 4.

FIG. 4 is a flowchart 400 illustrating the operation of an electronic device according to an embodiment of the disclosure.

The electronic device in FIG. 4 may correspond to the electronic device 101 shown in FIGS. 1, 2, 3A, and 3B. The operation in FIG. 4 may be performed by the electronic device 101 and/or the processor 120 shown in FIGS. 1, 2, 3A, and 3B. The operation in FIG. 4 may be performed based on the DB manager 211 and the data log & recovery manager 315 in FIG. 3A. Hardware components, a database, and at least one file described in the embodiment in FIG. 4 may correspond to the hardware components, the database 330, and at least one file (e.g., the first file 340 and the second file 350) shown in FIGS. 1, 2, 3A, and 3B.

An electronic device according to various embodiments may identify an error occurring or detected in the process of opening a database that is operating in a WAL mode. In response to identifying the error, the electronic device may guarantee access to data in the database, based on a WAL mode. For example, in response to identifying the error, the electronic device may open the database, based on the mode (e.g., a roll-back mode) other than the WAL mode. Alternatively, in response to identifying the error, the electronic device may open the database so as to ensure execution of a read operation. Alternatively, after identifying the error, the electronic device may switch the operation state of the database from the state of ensuring only the execution of a read operation to the state capable of executing all operations. In response to identifying the error, the electronic device may obtain the capacity of the memory required for producing and/or modifying at least one file (e.g., the first file 340 and the second file 350 in FIGS. 3A and 3B) used for access to the data in the database.

Referring to FIG. 4, in operation 410, an electronic device according to various embodiments may identify a request for opening a database stored in a storage. The database may be stored in the form of a file in the storage of the electronic device. The request may be identified from an application executed in the electronic device. For example, the request may include instructions and/or a structured query language (SQL) to open and/or activate a database related to the application.

In operation 415, the electronic device according to various embodiments may identify the state of a first file (e.g., a WAL file such as the first file 340 in FIGS. 3A and 3B) used for access to a database. The first file may be stored in a partition of the storage of the electronic device, in which the database is stored. The partition is a logical unit that distinguishes from a plurality of cells in the nonvolatile memory related to the storage, and may be specified or changed by an operating system installed in the electronic device and/or a user of the electronic device. In the case where the operation mode of the database corresponds to a WAL mode, the electronic device may identify the state of a first file (e.g., the first file 340 in FIGS. 3A and 3B) at least temporarily storing modified data of the database, based on a WAL mode.

The identifying the state of the first file by the electronic device in operation 415 may include identifying at least one of the existence of the first file, whether or not the first file can be modified, and/or whether or not the first file can be read. In an embodiment, the electronic device may identify the state of the first file in response to identifying the request for opening the database in operation 410. As described below, the electronic device according to various embodiments may open the database, based on different operations according to the state of the first file used for access to the database.

Referring to FIG. 4, in operation 420, the electronic device according to various embodiments may determine whether or not the first file is stored in the storage. In an embodiment, the electronic device may search for a first file used for access to the database in a partition of the storage, in which the database is stored. In an embodiment, the electronic device may determine whether or not at least one file used for access to the database is stored in the storage, based on the state identified in operation 415.

In the case where the at least one file is stored in the storage ("Yes" in operation 420), the electronic device according to various embodiments may determine whether or not the first file is in the state capable of reading information of the first file in operation 425. In an embodiment, the electronic device may determine whether or not data in the database can be processed based on the first file. In an embodiment, the electronic device may determine whether or not data in the database can be processed based on the first file in consideration of the state identified in operation 415. According to an embodiment, in order to determine whether or not the information on the first file can be read, the electronic device may determine whether or not the first file can be opened, read, and/or modified.

In an embodiment, the electronic device may determine whether or not the first file used for access to the database is in the state in which the modification of the file is allowed, based on operations 420 and 425. For example, the electronic device may determine whether or not the first file is in the state that allows reading data stored in the file.

If the first file is in the state capable of reading information on the file ("Yes" in operation 425), the electronic device according to various embodiments may determine whether or not the second file is in the state capable of reading information on the second file in operation 430. In an embodiment, the electronic device may determine whether or not a second file is stored in the storage and, if the second file is stored, whether or not the second file is in the state that allows reading data stored in the file. In an embodiment, the electronic device may determine whether or not data in a database can be processed based on the first file and the second file. For example, if both the first file and the second file are in the state capable of reading the information on the file and/or in the state that allows reading data stored in the file, the electronic device may determine that the data in the database can be processed based on the first file and the second file.

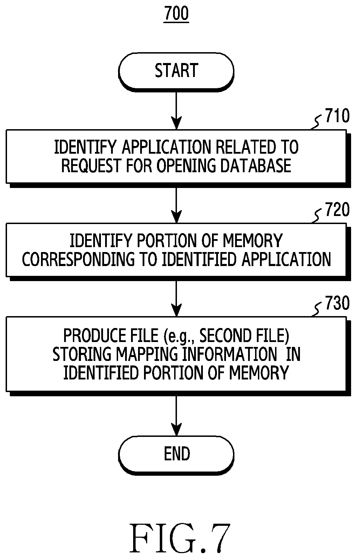

If the second file is in the state incapable of reading the information on the second file ("No" in operation 430), the electronic device according to various embodiments may open the database such that only the execution of a transaction related to a read operation with respect to the data in the database is allowed. The opening the database by the electronic device such that only the execution of a transaction related to a read operation is allowed may mean that the electronic device does not perform the remaining operations, excluding the read operation among various operations, in response to identifying the various operations for processing the data in the database after opening the database. For example, the electronic device may perform only a read operation among the various operations. Various embodiments related to operation 435 will be described with reference to FIG. 7.

In the case where the second file is in the state incapable of reading the information on the second file even though the first file is in the state capable of reading the information on the first file, the electronic device may open the database so as to allow only a read operation related to data in the database in the case where, for example, the second file cannot be opened, read, and/or modified in operation 435. After opening the database, the electronic device may ensure execution of the read operation. If the database is opened in operation 435, the electronic device may read and/or retrieve data from the database, based on the application that has produced the request in operation 410. In an embodiment, since the electronic device opens the database so as to allow only a read operation related to data in the database, the electronic device may read and/or retrieve data from the database, based on the application, even though the data in the database cannot be processed based on at least one file.

If the second file is in the state capable of reading the information on the second file ("Yes" in operation 430), the electronic device according to various embodiments may open the database so as to allow execution of all transactions related to data in the database in operation 440. If the database is opened in operation 440, the electronic device may read, retrieve, modify, and/or delete data of the database, based on the application that has produced the request in operation 410. If the database is opened in operation 440, the electronic device may access data in the database, based on the first file identified in operation 415 and the second file related to operation 430.

If the first file is not stored in the storage ("No" in operation 420), the electronic device according to various embodiments may determine whether or not the operation mode of the database is a first operation mode related to a WAL scheme in operation 445. The electronic device may identify an operation mode of the database from a specified area related to the database (e.g., a header area of the database) in the storage.

If the operation mode of the database is a first operation mode related to a WAL scheme ("Yes" in operation 445), the electronic device according to various embodiments may produce a first file based on the first operation mode in the storage storing the database in operation 450. The first file may correspond to a WAL file such as the first file 340 in FIGS. 2A and 2B. The electronic device may produce the at least one file in a partition in which a database is stored, among a plurality of partitions in the storage. In an embodiment, if the operation mode of the database is a first operation mode related to a WAL scheme, and if the first file used for access to data in the database according to the WAL scheme is not stored in the memory, the electronic device may attempt to produce a first file.

In operation 455, the electronic device according to various embodiments may determine whether or not the first file has been produced in the storage, based on operation 430. In an embodiment, the electronic device may identify a result of producing the first file, based on operation 450. In an embodiment, the electronic device may determine whether or not the first file has been successfully produced.

If a first file based on the first mode is not produced in the memory ("No" in operation 455), the electronic device according to various embodiments may open the database, based on a second operation mode, which is different from the first operation mode and is related to a roll-back scheme in operation 460. In an embodiment, in response to identifying that the first file has failed to be produced, the electronic device may switch the operation mode of the database from the first operation mode to the second operation mode. In an embodiment, if the operation mode of the database is not the first operation mode ("No" in operation 445), the electronic device may open the database, based on the second operation mode different from the first operation mode. In an embodiment, if the first file is stored in the storage ("Yes" in operation 420), and if the first file is in the state incapable of reading the information on the first file ("No" in operation 425), the electronic device may open the database, based on the second operation mode different from the first operation mode.

In an embodiment, if the first file cannot be produced in operation 450, the electronic device may open and/or activate the database, based on the second operation mode different from the first operation mode. In the state in which the database is open based on the second operation mode, the electronic device may access the database without any file related to the first operation mode in a WAL scheme (e.g., the first file 340 and the second file 350 in FIGS. 3A and 3B).

After opening the database, in operation 460, the electronic device according to various embodiments may process data in the database. The processing of the data may be performed based on the application that has produced the request in operation 410. In an embodiment, the electronic device may identify one or more transactions from the application. In response to identifying the transactions, the electronic device may process data in the database.

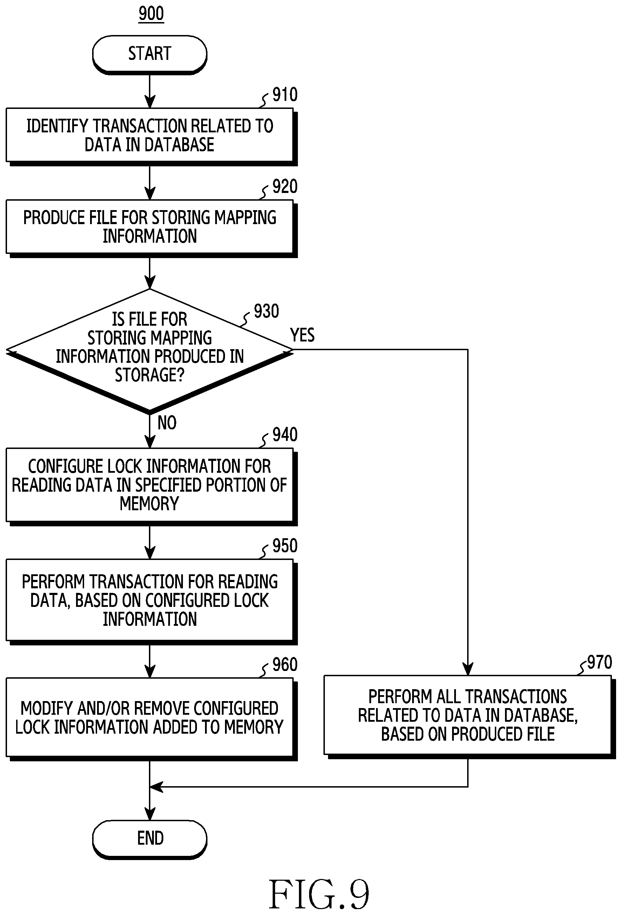

If the electronic device opens the database in operation 435, the electronic device may perform a processing operation corresponding to a read operation, among operations of processing data in the database, which are included in the transactions, and may not perform other types of processing operations except the read operation. For example, if the second file used for access to the database is not in the state that allows modification of the file, the electronic device may perform only a read operation with respect to data in the database, and may restrict the execution of the remaining processing operations (e.g., an operation of modifying data, an operation of deleting data, and an operation of adding data), excluding the read operation. Various embodiments in which the electronic device processes transactions related to data in the database while the database is open in operation 435 will be described with reference to FIG. 9.

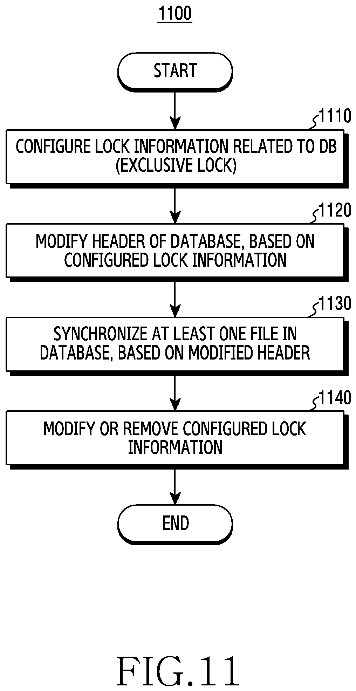

If the electronic device opens the database in operation 440, the electronic device may perform the processing operations included in the transaction, based on the first file and the second file. For example, if both the first file and the second file used for access to the database are in the state that allows modification of the file, the electronic device may execute the transaction, based on the first file and the second file. If the electronic device opens the database in operation 460, the electronic device may perform the transaction without accessing the first file and the second file. Various embodiments related to operation 460 will be described with reference to FIG. 11.

As described above, in response to the request in operation 410, the electronic device according to various embodiments may open and/or activate the database independently of the states of the first and second files used for access to the database and related to a WAL scheme. The electronic device may ensure execution of a transaction related to a read operation for retrieving or acquiring data from the database independently of the states of the first file and the second file. Since the execution of the transaction related to the read operation is ensured, it is possible to prevent an error caused when the electronic device fails to access to the database in the process of executing an application using the database.

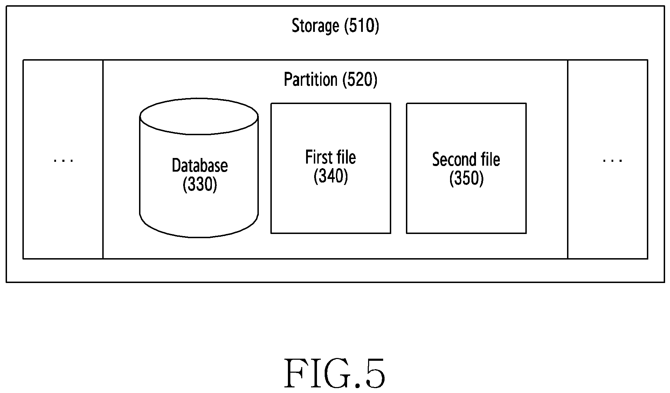

FIG. 5 is a diagram illustrating a database 330 stored in a storage 510 of an electronic device and at least one file related to the database 330 according to an embodiment of the disclosure.

The electronic device in FIG. 5 may correspond to the electronic device 101 shown in FIGS. 1 and 3A. The storage 510 in FIG. 5 may correspond to at least a portion of the nonvolatile memory 134 in FIGS. 1 and 3A.

The storage 510 may be distinguished by one or more partitions 520. The partition 520 may be specified by an operating system installed in the electronic device and/or a user of the electronic device. Referring to FIG. 5, a partition 520 for storing a database 330 in an electronic device is shown. In the case where the database 330 operates based on a WAL scheme, the electronic device may produce one or more files in the partition 520 for processing the database 330 according to a WAL scheme.

In an embodiment, the at least one file may include a first file 340 and a second file 350. The first file 340 and the second file 350 may correspond to the first file 340 and the second file 350 in FIGS. 3A and 3B. In an embodiment, the electronic device may store the data of the database 330, which is modified based on the transaction identified from the application, in the first file 340. The data may be stored in the first file 340 along a frame having a size corresponding to the database 330 and/or the page of the storage 510. The second file 350 may include information (e.g., mapping information) that matches data stored in the first file 340 to a portion of the database 330, based on the page and/or the frame.

It may be impossible to access files stored in the storage 510 and/or the partition 520 due to an unexpected error while the electronic device is in operation. For example, if the space of the partition 520 is insufficient, or if files more than a specified number are stored in the partition 520, the electronic device may at least temporarily not produce a new file, or may not add or record data to the file. For example, if the partition 520 is mounted in a read-only mode, the electronic device may at least temporarily not produce a new file in the partition 520, or may not add or record data to the file stored in the partition 520. If the partition 520 is mounted, it means that at least one file included in the partition 520 can be read by applications and/or services of the electronic device. In the above-described examples, the electronic device may identify that the first file 340 and the second file 350 cannot be modified, or may identify non-existence of the first file 340 and/or the second file 350.

If the first file 340 and the second file 350 cannot be modified or produced, the electronic device cannot process data in the database 330, based on the application and/or the service. Since the data in the database 330 cannot be processed, the electronic device cannot ensure the normal operation of the application and/or the service. In this case, the application and/or the service fails to acquire the data necessary for operation, and thus may be abnormally operated or forcedly terminated due to software errors such as an exception.

Even if the first file 340 and/or the second file 350 cannot be modified or produced, the electronic device according to various embodiments may ensure execution of a read operation related to data of the database 330, based on at least one operation described with reference to FIG. 4. For example, if the first file 340 and/or the second file 350 are not present in the partition 520, if the first file 340 and/or the second file 350 cannot be produced in the partition 520, or if information on the first file 340 and/or the second file 350 cannot be modified, the electronic device may open and/or activate the database 330, based on at least one of operations 435, 440, and 460 in FIG. 4.

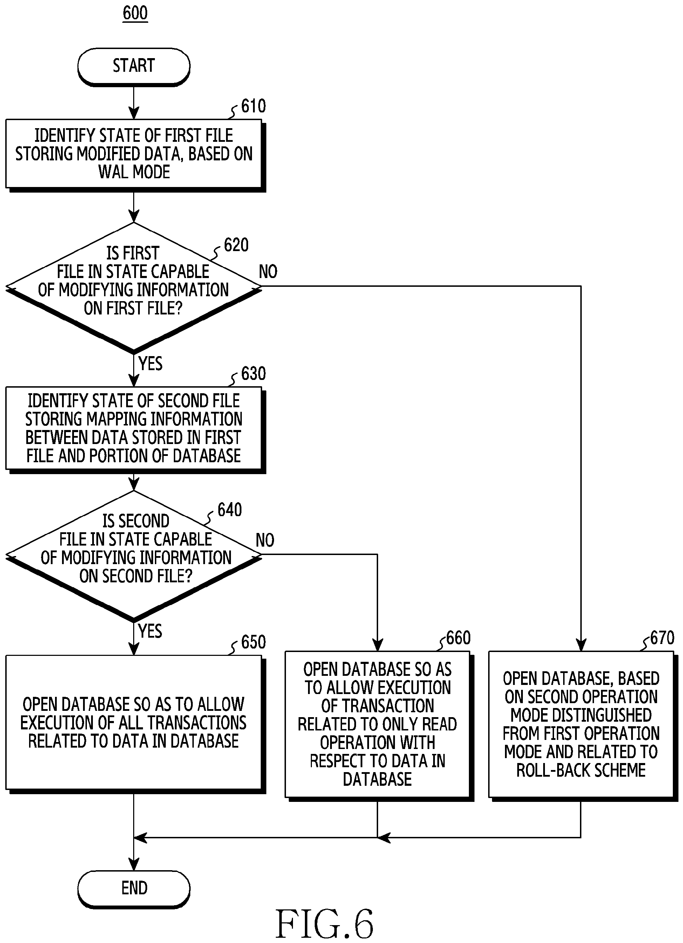

In an embodiment, if the electronic device opens and/or activates the database 330 in operation 435 in FIG. 4, the electronic device may ensure execution of a read operation related to data in the database 330 in the state in which the first file 340 and/or the second file 350 are not present and/or in the state in which the first file 340 and/or the second file 350 cannot be modified. Hereinafter, an operation in which the electronic device according to various embodiments checks the states of the first file 340 and/or the second file 350 will be described with reference to FIG. 6.

FIG. 6 is a flowchart 600 illustrating an operation in which an electronic device identifies the state of at least one file related to a database according to an embodiment of the disclosure.

The electronic device in FIG. 6 may correspond to the electronic device 101 shown in FIGS. 1 and 3A. The operation in FIG. 6 may be performed by the electronic device 101 and/or the processor 120 shown in FIGS. 1 and 3A. The operation in FIG. 6 may be performed based on the DB manager 211 and the data log & recovery manager 315 in FIG. 3A. Hardware components, a database, and at least one file described in the embodiment in FIG. 6 may correspond to the hardware components, the database 330, and at least one file (e.g., the first file 340 and the second file 350) shown in FIGS. 1, 3A, and 3B. The operation in FIG. 6 may be related to at least one of the operation (e.g., operations 425, 430, 435, 440, and 460) described with reference to FIG. 4.

Referring to FIG. 6, in operation 610, an electronic device according to various embodiments may identify the state of a first file that stores modified data based on a WAL mode. The electronic device may operate or process a database, based on a WAL mode. The first file may correspond to the first file 340 in FIGS. 3A and 3B. The first file may be stored, for example, in a partition of the storage in which the database is stored. In an embodiment, the electronic device may identify whether or not the first file is stored in the storage. In an embodiment, the electronic device may identify whether or not it is possible to extract data (e.g., data of a database modified based on a WAL mode) from the first file. In an embodiment, the electronic device may identify whether or not the first file can be modified, for example, whether or not additional information can be recorded in the first file.

Referring to FIG. 6, in operation 620, the electronic device according to various embodiments may determine whether or not the first file is in the state capable of modifying information on the first file, based on the identified state thereof. If the first file is in the state capable of modifying the information on the first file ("Yes" in operation 620), the electronic device according to various embodiments may identify the state of a second file storing mapping information between the data stored in the first file and a portion of the database in operation 630. The second file may be used to reconfigure at least one file included in a database, based on the first file. For example, the second file may correspond to the second file 350 in FIGS. 3A and 3B. The second file may be stored, for example, in a partition of the storage in which the database and/or the first file are stored. In an embodiment, the electronic device may identify whether or not the second file is stored in the storage. In an embodiment, the electronic device may identify whether or not it is possible to extract the mapping information from the second file. According to an embodiment, the electronic device may identify whether or not the second file can be modified, for example, whether or not additional mapping information can be recorded in the second file.

Referring to operations 610, 620, and 630 in FIG. 6, the electronic device according to an embodiment may inspect whether or not a read operation on the first file (for example, a WAL file) can be normally performed, and may then inspect the second file (e.g., a WAL index file). Referring to FIG. 6, in operation 640, the electronic device according to various embodiments may determine whether or not the second file is in the state capable of modifying information on the second file, based on the identified state thereof. In response to identifying the second file stored in the storage, the electronic device according to an embodiment may retain a space of the storage related to the second file, based on the first file. Retaining the space of the storage related to the second file may include an operation expanding or pre-allocating the area of the storage corresponding to the second file, based on the size of the first file and/or the size of the mapping information to be produced.

In an embodiment, the size of the second file may be increased by a multiple of a specified size (e.g., 32 KB). For example, the minimum value of the size of the second file may be 32 KB, and may be increased by 32 KB according to the size of the first file. For example, whenever the size of the first file exceeds 16 MB, the size of the second file may be increased by 32 KB. In this case, if the size of the second file is 32 KB, the size of the first file may be 16 MB or less. If the size of the second file is 64 KB, the size of the first file may be included in the range of 16 MB to 32 MB. If the size of the second file is 96 KB, the size of the first file may be included in the range of 32 MB to 48 MB.

According to an embodiment, in the case where the size of the second file cannot be expanded based on the size of the first file, the electronic device may determine that the second file is in the state incapable of modifying information on the second file. For example, if the size of the second file smaller than 96 KB cannot be increased in the state in which the size of the first file exceeds 48 MB, the electronic device may determine that it is impossible to add mapping information to the second file or to modify the second file. For example, in the case where the capacity of the partition in which the database, the first file, and/or the second file are stored is insufficient to secure the size of the second file corresponding to the size of the first file, the electronic device may determine that it is impossible to modify the second file.

According to an embodiment, if the size of the second file can be increased based on the size of the first file, the electronic device may determine that the second file is in the state capable of modifying information on the second file. According to an embodiment, even if the size of the second file can be increased based on the size of the first file, in the case where the second file and/or the partition in which the second file is stored are set in the read-only mode, the electronic device may determine that the second file is in the state incapable of modifying information on the second file.

If the second file is in the state capable of modifying information on the second file ("Yes" in operation 640), the electronic device may open the database so as to allow execution of all transactions related to data in the database in operation 650. The electronic device may perform operation 650 in FIG. 6 in a manner similar to operation 435 in FIG. 4. After opening or activating the database in operation 650, the electronic device may process data in the database, based on the first file, the second file, and/or the transaction in response to identifying the transaction from the application. In this case, the electronic device may store the data of the database modified based on the transaction in the first file, and may then apply the data stored in the first file to the database according to a specified condition, based on the second file. The specified condition may include a condition in which the size of the first file exceeds a specified value and/or a condition for receiving a request for closing the database.

In an embodiment, if the first file and/or the second file are in the state in which the database cannot be normally opened, the electronic device may open the database, based on a read-only mode and/or an operation mode related to a roll-back scheme. Referring to FIG. 6, if the second file is in the state incapable of modifying information on the second file ("No" in operation 640), the electronic device may open the database so as to allow only the execution of a transaction related to a read operation with respect to data in the database in operation 660. In an embodiment, the electronic device may perform operation 660 in FIG. 6 in a manner similar to operation 435 in FIG. 3. After opening or activating the database in operation 660, in response to identifying a transaction by the application, the electronic device may process the data in the database, based on the read operation included in the transaction, and may discard the remaining processing operations except the read operation from the transaction. In an embodiment, the electronic device may ensure the execution of a read operation included in the transaction.

Referring to FIG. 6, if the first file is in the state incapable of modifying information on the first file ("No" in operation 620), the electronic device may open the database, based on a second operation mode different from the first operation mode and related to a roll-back scheme, in operation 670. In an embodiment, the electronic device may perform operation 670 in FIG. 6 in a manner similar to operation 460 in FIG. 4. After opening or activating the database in operation 670, in response to identifying a transaction from the application, the electronic device may perform all operations included in the transactions without access to the first file and the second file. In another embodiment, if the first file is in the state incapable of modifying information on the first file ("No" in operation 620), the electronic device may perform processing errors without opening the database.

Hereinafter, various embodiments of an operation performed by the electronic device in order to ensure execution of the read operation will be described with reference to FIG. 7.

FIG. 7 is a flowchart 700 illustrating an operation in which an electronic device produces a second file in a memory according to an embodiment of the disclosure.

The electronic device in FIG. 7 may correspond to the electronic device 101 shown in FIGS. 1, 3A, and 3B. The operation in FIG. 7 may be performed by the electronic device 101 and/or the processor 120 shown in FIGS. 1, 3A, and 3B. The operation in FIG. 7 may be performed based on the DB manager 211 and the data log & recovery manager 315 in FIG. 3A. Hardware components, a database, and at least one file described in the embodiment in FIG. 7 may correspond to the hardware components, the database 330, and at least one file (e.g., the first file 340 and the second file 350) shown in FIGS. 1, 3A, and 3B.

The operation in FIG. 7 may be related to at least one of the operations in FIG. 4 (e.g., operation 435) and/or at least one of the operations in FIG. 6 (e.g., operation 660). In an embodiment, the electronic device may perform at least one of the operations in FIG. 7 in the state in which the electronic device opens or activates a database so as to allow only the execution of a transaction related to a read operation with respect to data in the database, based on operation 435 in FIG. 4 and/or operation 660 in FIG. 6.

If a second file (for example, the second file 350 in FIGS. 3A and 3B) that is stored in the storage and stores mapping information related to the first file is not available, the electronic device may perform at least one of the operations in FIG. 7. For example, the electronic device may perform at least one of the operations in FIG. 7 in the state in which the second file is not present in the storage or in the state in which the second file stored in the storage cannot be modified.

Referring to FIG. 7, in operation 710, an electronic device according to various embodiments may identify an application related to a request for opening a database. The electronic device may identify an application corresponding to a request for opening or activating a database. The request may correspond to the request in operation 410 in FIG. 4. While the electronic device performs operation 710, the application may be executed by the electronic device.

Referring to FIG. 7, in operation 720, an electronic device according to various embodiments may identify a portion of a memory corresponding to the identified application. The memory may correspond to, for example, the volatile memory 132 in FIGS. 1 and 2. In an embodiment, the portion of the memory corresponding to the application may be a portion allocated to the application by the electronic device, based on an operating system. For example, the portion of the memory corresponding to the application may include a heap area and/or a heap memory allocated to the application. The heap area and/or the heap memory may be used, for example, to at least temporarily store data produced while the application is running.

Referring to FIG. 7, in operation 730, an electronic device according to various embodiments may produce a file that stores mapping information between a result of processing data and a portion of the database in the identified portion of the memory. The file may correspond to the second file 350 in FIGS. 3A and 3B. In an embodiment, the electronic device may produce a file for storing the mapping information in a heap area and/or a heap memory allocated to the application. The size of the file may be determined based on the size of a file (e.g., the first file 340 in FIGS. 3A and 3B) for at least temporarily storing a result of processing data in the database.

Even if the file storing the mapping information is not stored in the storage (e.g., a partition in the storage in which the database is stored), the electronic device according to various embodiments may produce the file in the memory, based on at least one of the operations in FIG. 7. Based on the file produced in the memory, the electronic device may ensure execution of a read operation related to data in the database.

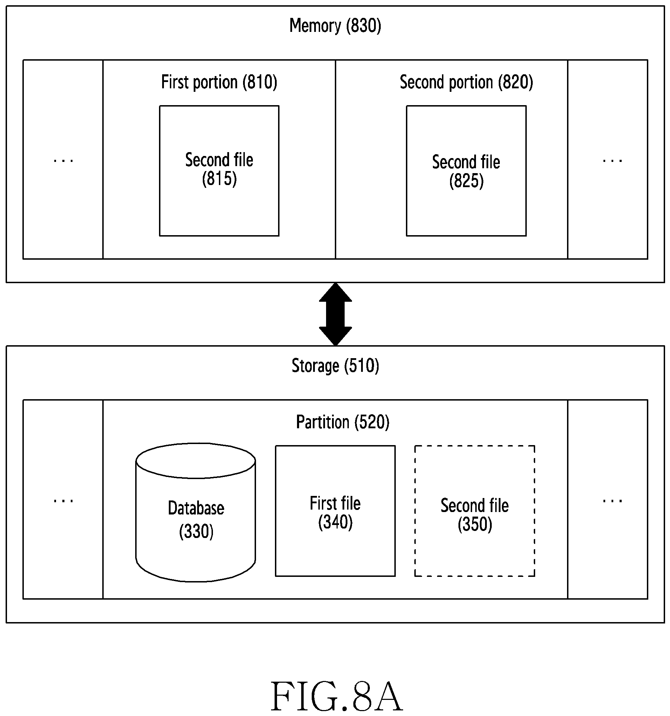

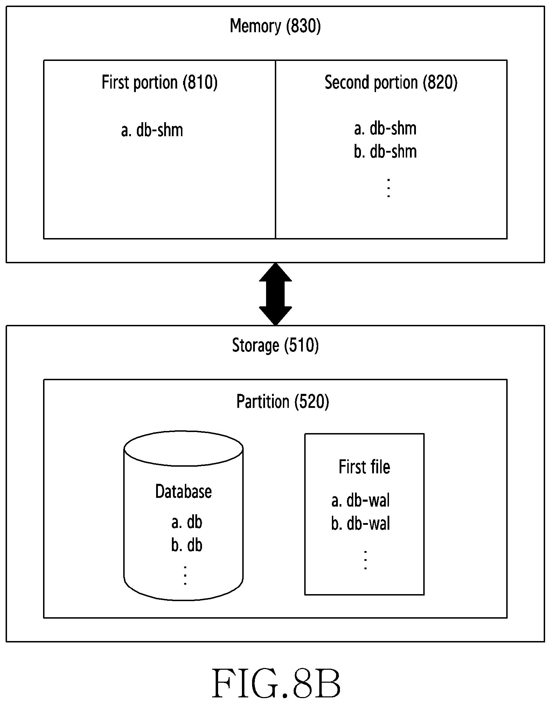

In an embodiment, if the electronic device simultaneously executes a plurality of applications, based on multitasking, all of the plurality of applications may access data in a database. In this situation, the electronic device may produce a file that stores the mapping information in a plurality of portions corresponding to the respective ones of the plurality of applications (e.g., heap areas allocated to the respective ones of the plurality of applications). Hereinafter, various embodiments of an operation in which an electronic device produces a file for storing mapping information in the situation in which all of the plurality of applications access data in a database will be described with reference to FIGS. 8A and 8B.

FIG. 8A is a diagram illustrating an operation in which an electronic device stores a file, which stores mapping information, in a memory 830 according to an embodiment of the disclosure, and FIG. 8B is a diagram illustrating an operation in which an electronic device which stores mapping information, in a memory 830 according to an embodiment of the disclosure. The electronic device in FIGS. 8A and 8B may correspond to the electronic device 101 in FIGS. 1, 3A, and 3B. The storage 510 in FIGS. 8A and 8B may correspond to the storage 510 in FIG. 5.

An electronic device according to various embodiments may mount at least one of a plurality of partitions configured in the storage 510. The plurality of partitions may include a partition 520 in which at least one file related to the database 330 is stored. When mounting the partition 520, the electronic device may determine whether or not to allow each of a read operation, a write operation, and a delete operation related to at least one file included in the partition 520. Mounting the partition 520 in a read-only mode may mean that the electronic device allows only a read operation with respect to at least one file stored in the partition 520, among the operations, and does not allow the remaining operations.

In the state in which the partition 520 is mounted, the electronic device according to various embodiments may identify a request produced based on an application and/or a service. The request may include a request for opening or activating the database 330. In the case where the database 330 is operated based on a WAL scheme, while opening or activating the database 330 in response to identifying the request, the electronic device according to various embodiments may identify the state of at least one file required to operate the database 330, based on a WAL scheme, according to at least one of the operations in FIGS. 4, 6, and 7.

The at least one file may include a first file 340 for at least temporarily storing data of the database 330 modified based on a WAL scheme and a second file 350 for storing mapping information used to modify data in the database 330, based on the data stored in the first file 340. The first file 340 and the second file 350 may correspond to the first file 340 and the second file 350 in FIGS. 3A and 3B. In an embodiment, checking the state of the at least one file by the electronic device may include an operation of identifying whether or not the at least one file is stored in partition 510 and/or whether or not the at least one file can be modified.

Referring to FIG. 8, it is assumed that the second file 350 is not stored in the partition 510 or cannot be modified. In this case, for example, the electronic device may produce a file for storing the mapping information in the memory 830, based on the operations in FIG. 7. The electronic device may produce the file in a portion of the memory 830 corresponding to the application and/or service that has produced the request for opening or activating the database 330.

For example, it is assumed that the electronic device identifies requests for opening or activating the database, which are from a first application and a second application. In response to identifying the requests, the electronic device may identify a first portion 810 and a second portion 820 allocated to the first application and the second application, respectively, in the memory 830. Each of the first portion 810 and the second portion 820 may correspond to a heap area and/or a heap memory of each of the first application and the second application.

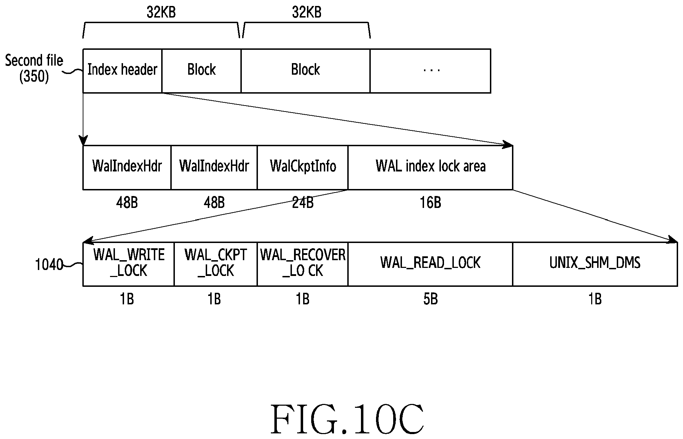

The electronic device may produce a second file 815 corresponding to the first application and storing the mapping information in the first portion 810. The electronic device may produce a second file 825 corresponding to the second application and storing the mapping information in the second portion 820. Various embodiments of the structure of each of the second files 815 and 825 will be described with reference to FIG. 10C. The second files 815 and 825 may remain in the first portion 810 and the second portion 820 of the memory 830, respectively, while the electronic device executes the first application and the second application.

According to an embodiment, a plurality of second files may be produced by the electronic device in the memory 830 for each of the application executed in the electronic device. Referring to FIG. 8B, a plurality of data files "a.db" and "b.db" in which data of a database is stored and a plurality of first files "a.db-wal" and "b.db-wal" corresponding to the respective ones of the plurality of data files may be stored in a partition 520 of an electronic device.

For example, if the electronic device identifies a request from the first application for opening or activating any one of a plurality of data files (e.g., "a.db"), the electronic device may identify the states of the first file and the second file corresponding to the data file in the partition 520. In the example in FIG. 8B, it is assumed that the electronic device has identified the first file "a.db-wal" corresponding to the data file "a.db" but failed to identify the second file. In this case, the electronic device may produce a second file "a.db-shm" related to the first file "a.db-wal" in the first portion 810 of the memory 830 corresponding to the first application.

The electronic device may identify a request for opening or activating a plurality of data files (e.g., "a.db" and "b.db") from the second application independently of the first application. In this case, the electronic device may identify the states of the first files and the second files corresponding to the data files in the partition 520. In the example in FIG. 8B, it is assumed that the electronic device has identified the first files "a.db-wal" and "b.db-wal" corresponding to the respective data files "a.db" and "b.db" but failed to identify the second files. In this case, the electronic device may produce second files "a.db-shm" and "b.db-shm" corresponding to the respective first files "a.db-wal" and "b.db-wal" in the second portion 820 of the memory 830 corresponding to the second application.

Referring to FIG. 8A, in the state in which the second files 815 and 825 are produced in the first portion 810 and the second portion 820 of the memory 830, respectively, the electronic device according to an embodiment may prevent the first application and the second application from concurrently accessing the database 330 and/or the first file 340, based on the information included in the database 330. The information may include lock information (e.g., file lock) to prevent and/or control the access of the first application and the second application to the database 330 and/or the first file 340. Hereinafter, referring to FIG. 9, various embodiments of an operation in which an electronic device according to an embodiment controls concurrent access of a plurality of applications, such as a first application and a second application, and/or a plurality of services to the database 330 will be described with reference to FIG. 9.

FIG. 9 is a flowchart 900 illustrating an operation in which an electronic device processes a transaction identified from an application and/or a service according to an embodiment of the disclosure. For example, the electronic device may perform the operations in FIG. 9 in the state in which data in the database cannot be processed based on at least one file used for access to the database. The electronic device in FIG. 9 may correspond to the electronic device 101 shown in FIGS. 1, 3A, and 3B. The operation in FIG. 9 may be performed by the electronic device 101 and/or the processor 120 shown in FIGS. 1, 3A, and 3B. The operation in FIG. 9 may be performed based on the DB manager 211 and/or the data log & recovery manager 315 in FIG. 3A. Hardware components, a database, and at least one file described in the embodiment in FIG. 9 may correspond to the hardware components, the database 330, and at least one file (e.g., the first file 340 and the second file 350) shown in FIGS. 1, 3A, and 3B.

At least one of the operations in FIG. 9 may be related to at least one of the operations in FIGS. 4, 6, and/or 7, or may be performed in a manner similar thereto. In an embodiment, the electronic device may perform at least one of the operations in FIG. 9 in the state in which the electronic device opens or activates a database so as to allow only execution of a transaction related to a read operation with respect to data in the database in operation 435 in FIG. 4. In an embodiment, in the state in which a file for storing mapping information is produced in a memory, based on at least one of the operations in FIG. 7, the electronic device may perform at least one of the operations in FIG. 9. In an embodiment, if the file for storing the mapping information (e.g., the second file 350 in FIGS. 3A and 3B) fails to be produced, the electronic device may perform at least one of the operations in FIG. 9. The operations in FIG. 9 may be performed in the state in which the electronic device cannot record, in the file, a parameter for preventing a write operation with respect to data of a database from being performed at the same time.

Referring to FIG. 9, in operation 910, an electronic device according to various embodiments may identify a transaction related to data in a database. The transaction may be identified from an application and/or a service running in the electronic device. In an embodiment, the electronic device may identify a transaction including one or more of the processing operations from an application and/or a service. The transaction may include commands related to at least one of an add operation for adding data to a database, a read operation for retrieving or obtaining data from a database, a remove operation for removing data from a database, and/or a modify operation for modifying data in a database.

In operation 920, the electronic device according to various embodiments may produce a file for storing mapping information. The file may correspond to, for example, the second file 350 in FIGS. 3A and 3B. In an embodiment, the electronic device may attempt to produce the file in a partition of the storage related to the database. Operation 920 may be performed in response to identifying the processing operation in operation 910. In the state in which the database is opened or activated so as to allow only a read operation, the electronic device according to an embodiment may attempt to produce the file whenever the transaction and/or the processing operation is identified in operation 920.

In an embodiment, attempting to produce the file may be related to whether or not it is possible to identify a portion for storing the file for storing mapping information in the storage. The size of the file for storing mapping information may be determined based at least in part on the size of the file (e.g., the first file 340 in FIGS. 3A and 3B) that at least temporarily stores the result of processing the data in the database. The size of the file for storing mapping information may be determined in a manner similar to that described with reference to FIG. 5. If the portion of the storage corresponding to the size cannot be identified, the electronic device may determine that the file cannot be produced.

In an embodiment, the file for storing mapping information may be newly produced each time the database is opened or activated. In an embodiment, the electronic device may produce the file by initializing the file for storing mapping information stored in the storage. For example, the electronic device may change the bits of the file to a specified value (e.g., 0). If the initialization of the file is completed, the electronic device may perform all processing operations related to data in the database, based on the initialized file.

In operation 930, the electronic device according to various embodiments may determine whether or not a file for storing mapping information is produced in the storage. In an embodiment, the electronic device may determine whether or not a file for storing mapping information is produced in the storage, based on operation 920. If the file configured to store mapping information and having a size based on the size of the file, in which the result of processing the data in the database is stored, is produced in the partition in which the database is stored, the electronic device may determine that the file for storing the mapping information has been produced in the storage. If the file for storing mapping information stored in the storage is initialized, the electronic device may determine that the initialized file is the file produced in operation 920.

Referring to operations 910, 920, and 930 in FIG. 9, in the state in which the database is opened or activated so as to allow only the execution of a transaction related to a read operation, the electronic device may attempt to produce a file for storing mapping information each time a transaction is identified. In the case where the file for storing mapping information has been successfully produced in the storage ("Yes" in operation 930), the electronic device according to various embodiments may enter the state that allows all types of transactions related to data in the database, as well as the transaction related to the read operation. For example, in operation 970, the electronic device may perform all transactions related to data in the database, based on the produced file.

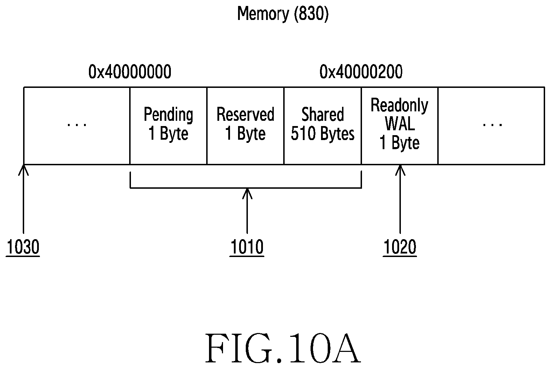

In the case where the file for storing mapping information is not produced in the storage ("No" in operation 930), the electronic device according to various embodiments may configure lock information for reading data in a specified portion of the memory in operation 940. In an embodiment, the lock information may indicate that execution of the remaining operations, except for a read operation related to data of a database, is restricted. In an embodiment, the lock information may indicate that the database has been opened and/or activated so as to allow only the execution of a transaction related to a read operation. The position of the specified portion in the memory to which the lock information is added may be separated by a specified offset from the address of the memory related to the database. Configuration of the lock information in the memory will be described in detail with reference to FIG. 10A.

In an embodiment, the lock information may indicate that at least one file included in the database is used based in a read-only mode. In an embodiment, the lock information may be added to a file that stores data in the database and/or a file that at least temporarily stores data in the database (e.g., the first file 340 in FIGS. 3A and 3B). Various embodiments of the operation in which the electronic device according to an embodiment adds the lock information to a file storing data of a database will be described with reference to FIG. 10A.

In operation 950, the electronic device according to various embodiments may perform a transaction for reading data, based on the configured lock information. The electronic device may perform operation 950 in response to configuring the lock information. In an embodiment, the electronic device may restrict the execution of the remaining transactions, except for the transaction for reading data. Since the electronic device performs operation 950, based on the lock information, it is possible to prevent a write operation related to the database, which is open so as to allow only a read operation, from being performed.

After executing the transaction for reading data, the electronic device according to various embodiments may modify and/or remove lock information configured in the memory in operation 960. In an embodiment, the electronic device may remove the lock information from a specified area in the memory. In an embodiment, the electronic device may return the obtained lock information. According to an embodiment, the electronic device may change the lock information configured in the memory to a value indicating that the execution of the transaction for reading data in operation 950 has been completed.

Referring to operations 940, 950, and 960, the electronic device may configure the lock information whenever a processing operation and/or a transaction are identified. In response to configuring the lock information, the electronic device may perform the processing operation and/or the transaction including a read operation related to data in a database. The electronic device may release the lock information when the processing operation and/or the transaction end.

If a file for storing mapping information is produced in the storage ("Yes" in operation 930), the electronic device according to various embodiments may perform all transactions related to data in the database, based on the produced file in operation 970. In an embodiment, if a file for storing mapping information is normally initialized or produced, the electronic device may enter the state that allows the execution of all transactions related to data in the database even when only the execution of the transaction related to a read operation with respect to data in the database is allowed.

For example, even after the electronic device opens or activates the database so as to allow only the execution of the transaction related to a read operation with respect to data in the database in operation 435 in FIG. 4, the electronic device may perform all transactions related to data in the database in operation 970. In this case, the electronic device may operate as if the database is opened or activated in operation 460 in FIG. 4.

In the state in which only a read operation related to data in the database is allowed, the electronic device may determine whether or not it is possible to switch to the state that allows all types of processing operations related to data in the database. For example, the electronic device may determine whether or not it is possible to switch to the state that allows all types of processing operations related to data in the database whenever a processing operation and/or a transaction for processing data in the database is identified from an application and/or a service. In an embodiment, the electronic device may switch to the state that allows all types of processing operations related to data in the database at the time at which a file for storing mapping information can be produced and/or initialized in the state in which only a read operation related to data in the database is allowed.

Hereinafter, various embodiments of a database managed by an electronic device according to various embodiments, a first file for storing a result of processing data in a database, and a second file for storing mapping information will be described with reference to FIGS. 10A to 10C.

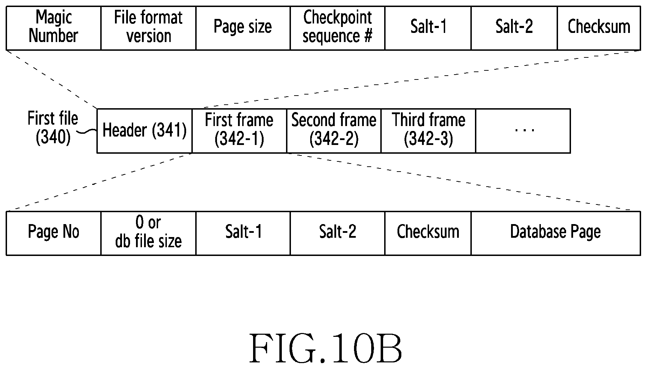

FIG. 10A is a diagram illustrating an example of the structure of a database 330 in an electronic device according to an embodiment of the disclosure. FIG. 10B is a diagram illustrating an example of the structure of a first file 340 according to an embodiment of the disclosure. FIG. 10C is a diagram illustrating an example of the structure of a second file 350 according to an embodiment of the disclosure. The electronic device in FIGS. 10A to 10C may correspond to the electronic device 101 in FIGS. 1, 3A, and 3B. A database 330, a first file 340, and a second file 350 in FIGS. 10A to 10C may correspond to the database 330, the first file 340, and the second file 350 in FIGS. 3A and 3B, respectively.

Referring to FIG. 10A, a portion of a memory 830 in an electronic device according to an embodiment is shown. In an embodiment, the electronic device may include one or more pieces of information related to the state of the database 330 (e.g., a pending byte, a reserved byte, and shared bytes for configuring lock information such as shared lock) in a specified portion 1010 of the memory. The portion 1010 may be positioned to be spaced a specified size (e.g., 1 GB) and/or offset (0x40000000) apart from the start position and/or start point 1030 of the database 330 in the memory 830. A parameter that the electronic device adds to the database 330 in order to read data in the database 330, for example, the lock information configured in operation 940 in FIG. 9, may be included in another portion 1020 adjacent to the portion 1010. The size of the portion 1020 may correspond to a specified size (e.g., 1 byte). The lock information may indicate that the database is opened or activated so as to allow only the execution of a transaction related to a read-only mode.

In an embodiment, if at least one file used for access to data in the database is in the state that does not allow modification of the file, the electronic device may add lock information indicating that execution of transactions other than the transaction related to a read operation with respect to data of the database are restricted. In an embodiment, if it is impossible to normally produce, initialize, and/or modify a second file (e.g., the second file 350 in FIG. 3A), the electronic device may add the lock information to the portion 1020 of the database 330 and/or a first file (e.g., the first file 340 in FIG. 3A), instead of the second file for storing mapping information. For example, the lock information may be added to a specified area and/or data structure in the memory 830 managed based on an operating system of the electronic device. The specified area and/or data structure may be related to the database 330 and/or the first file. By adding the lock information to the specified portion 1020 of the memory 830, the electronic device may allow the execution of a read operation related to data in the database 330 even in the state in which the second file 350 cannot be produced, initialized, and/or modified normally. According to an embodiment, the electronic device may add the lock information to another file, which is different from the second file 350, and/or another area of the memory.

Referring to FIG. 10B, the structure of a portion of the first file 340 is shown according to an embodiment. The first file 340 may be a file in which data of the database 330 modified based on a WAL scheme is at least temporarily stored. The first file 340 may include a header 341 (e.g., a WAL header) and one or more frames (e.g., WAL frames such as a first frame 342-1, a second frame 342-2, and a third frame 342-3).

The header 341 of the first file 340 may include fundamental information related to the first file 340. Referring to FIG. 10B, the field "Magic Number" in the header 341 may include information used for the electronic device to recognize the first file 340. The field "Page Size" in the header 341 may include information indicating a unit (e.g., chunk and/or page) for managing data in the database 330. A plurality of fields "Salt" in the header 341 may include a certain value identified when producing the first file 340. The electronic device may compare a plurality of values included in the plurality of fields "Salt" with each other. If the plurality of values match each other, the electronic device may determine that the first file 340 and/or one or more frames included in the first file 340 are normal. The field "Checksum" in the header 341 may be used to determine whether or not an error exists in the header 341 of the first file 340.

One or more frames of the first file 340 may include modifications of the database 330. Referring to FIG. 10B, the structure of a first frame 342-1 is illustrated, among a plurality of frames included in the first file 340. Referring to the structure of the first frame 342-1, each of the plurality of frames may include a WAL frame header and a page. The plurality of frames of the first file 340 may be matched to a plurality of pages of the database 330, respectively. The electronic device may record an identifier of a page (e.g., a page number) of the database 330, which is matched to the corresponding frame, in the WAL frame header (e.g., in the field "Page No").

In an embodiment, if there is no first file 340 in a memory, if the size of the first file 340 is zero, if the header 341 of the first file 340 is not valid (for example, in the case where only "0" is included in the header 341), or if there is no valid frame in the first file 340 (for example, in the case where all of the frames including a first frame 342-1 to a third frame 342-3 are not invalid), the electronic device may determine that the first file 340 is invalidated.

Referring to FIG. 10C, a portion of a second file 350 and the structure thereof are shown according to an embodiment. The second file 350 may include an index header and one or more blocks. The blocks may include mapping information between a frame of the first file 340 and a page of the database 330. The index header may include information about the second file 350 (e.g., a plurality of fields "WalIndexHdr" having a size of 48 bytes and a field "WalCkptInfo" having a size of 24 bytes). The index header may include an area (i.e., a "WAL index lock area") 1040 in which lock information allocated to an application and/or a service corresponding to the second file 350 is recorded. The size of the area 1040 may be, for example, 16 bytes. The lock information may indicate that the application and/or the service exclusively performs a specific type of processing operation related to the database 330. For example, the lock information may be used to prevent an operation of processing data in the database 330 from being executed by another application and/or service other than the application and/or service.

Referring to FIG. 10C, the field "WAL_WRITE_LOCK" in the area 1040 may have an index "0" and a size of 1 byte. If a write operation and/or a transaction for writing data is identified from an application, the electronic device may acquire lock information (e.g., "WRITE_LOCK") corresponding to the write operation. In response to obtaining the lock information, the electronic device may modify a value of the field "WAL_WRITE_LOCK", and may perform the write operation and/or the transaction.

The field "WAL_CKPT_LOCK" of the area 1040 may have an index "1" and a size of 1 byte. The field "WAL_CKPT_LOCK" may indicate acquisition of lock information (e.g., "CKPT_LOCK") for executing a check point operation related to the database 330. The check point operation may denote an operation of reflecting all the results stored in the first file 340 to the database 330.

The field "WAL_RECOVER_LOCK" of the area 1040 may have an index "2" and a size of 1 byte. The field "WAL_RECOVER_LOCK" may indicate acquisition of lock information (e.g., "RECOVER_LOCK") for changing and/or recording a second file, such as a WAL-index file of the database 330. For example, the electronic device may record and/or configure mapping information in the second file, based on the lock information configured in the field "WAL_RECOVER_LOCK".

The field "WAL_READ_LOCK" of the area 1040 may have an index "3" to "7" and a size of 5 bytes. The field "WAL_READ_LOCK" may indicate acquisition of lock information (e.g., "READ_LOCK") for executing a read operation with respect to the database 330.

The field "UNIX_SHM_DMS" of the area 1040 may have an index "8" and a size of 1 byte. The field "UNIX_SHM_DMS" may indicate acquisition of lock information (e.g., "DMS LOCK") for executing an operation of reducing the length of the second file 350 (e.g., a truncate operation of reducing the size of the second file 350 to zero) when the database 330 is initially opened or activated.

If it is impossible to produce, initialize, and modify the second file 350, based on the partition in which the database 330 is stored, it may be impossible to display lock information related to a processing operation using the area 1040 included in the second file 350 (for example, the lock information indicating that a transaction related to a read operation with respect to data in a database is to be performed). In an embodiment, the electronic device may display the lock information, based on the portion 1020 of the memory 830, instead of the area 1040 of the second file 350. Since the lock information is displayed based on the portion 1020 of the memory 830, the electronic device may ensure the execution of at least a portion of the transactions with respect to data in the database 330 identified from an application and/or a service (e.g., a transaction related to a read operation with respect to data in the database 330) even though it is impossible to produce, initialize, or modify the second file 350.

In an embodiment, the electronic device may switch the operation mode of the database 330 from a WAL mode to a roll-back mode. Hereinafter, an operation in which the electronic device switches the operation mode of the database 330 will be described in detail with reference to FIG. 11.

FIG. 11 is a flowchart 1100 illustrating an operation performed by an electronic device in the state in which there is not any file used for access to a database according to an embodiment of the disclosure. The electronic device in FIG. 11 may correspond to the electronic device 101 in FIGS. 1, 3A, and 3B. The operation in FIG. 11 may be performed by the electronic device 101 and/or the processor 120 shown in FIGS. 1, 3A, and 3B. The operation in FIG. 11 may be performed based on the DB manager 211 and the data log & recovery manager 315 in FIG. 3A. Hardware components, a database, and at least one file described in the embodiment in FIG. 11 may correspond to the hardware components, the database 330, and at least one file (e.g., the first file 340 and the second file 350) shown in FIGS. 1, 3A, and 3B.

At least one of the operations in FIG. 11 may be related to at least one of the operations in FIG. 4, for example, operation 460 in FIG. 4. According to an embodiment, the electronic device may perform at least one of the operations in FIG. 11 in order to open or activate a database, based on a roll-back scheme different from a WAL scheme. In an embodiment, if it is impossible to produce or initialize at least one file (e.g., the first file 340 and the second file 350 in FIGS. 3A and 3B) for accessing data in a database based on a WAL scheme, the electronic device may attempt to switch from the WAL scheme to a roll-back scheme, based on at least one of the operations in FIG. 11.

Referring to FIG. 11, in operation 1110, an electronic device according to various embodiments may configure lock information related to a database (e.g., an exclusive lock). The lock information may be intended to modify data recorded in a database stored in the storage. For example, the lock information may be obtained in the absence of an application and a service accessing the database.

In operation 1120, the electronic device according to various embodiments may modify a header of the database, based on the lock information configured in operation 1110. Since the lock information is related to an exclusive lock, while the electronic device modifies the header of the database stored in the storage, access to the database in the storage, based on another application and/or another service different from a specific application and/or a specific service, may be restricted.

The electronic device may change a value of a specified area indicating a journal mode of the database in the header of the database (e.g., the header 331 in FIG. 3A). For example, the electronic device may change the value from a specified first value related to a WAL scheme to a specified second value related to a roll-back scheme (the second value is different from the first value). According to the modification of the header, the operation mode of the database may switch from a first operation mode based on a WAL scheme to a second operation mode based on a roll-back scheme.

In operation 1130, the electronic device according to various embodiments may synchronize at least one file in the database, based on the modified header. In an embodiment, the electronic device may change the value of the header of the database file from a first value indicating that the database operates based on a WAL scheme to a second value indicating that the database operates based on a roll-back scheme. After changing the value of the header of the database file, the electronic device may synchronize the database file with respect to a memory (or a disk in the electronic device), based on a roll-back scheme. In an embodiment, synchronization of the database may mean synchronization between data of a database stored in the memory and data of a database stored in the storage. The lock information in operation 1110, such as an exclusive lock, may be configured while the electronic device performs synchronization between the data of the database stored in the memory and the data of the database stored in the storage.

In operation 1140, the electronic device according to various embodiments may modify or remove the lock information configured in operation 1110. The modification or removal of the lock information may include an operation of releasing an exclusive lock acquired by the electronic device in operation 1110. After switching to the roll-back scheme, even if there is not any file based on the WAL scheme (for example, a WAL index file, such as the first file 340, and a WAL index file, such as the second file 350, in FIGS. 3A and 3B), the electronic device may perform a transaction related to the data in the database.

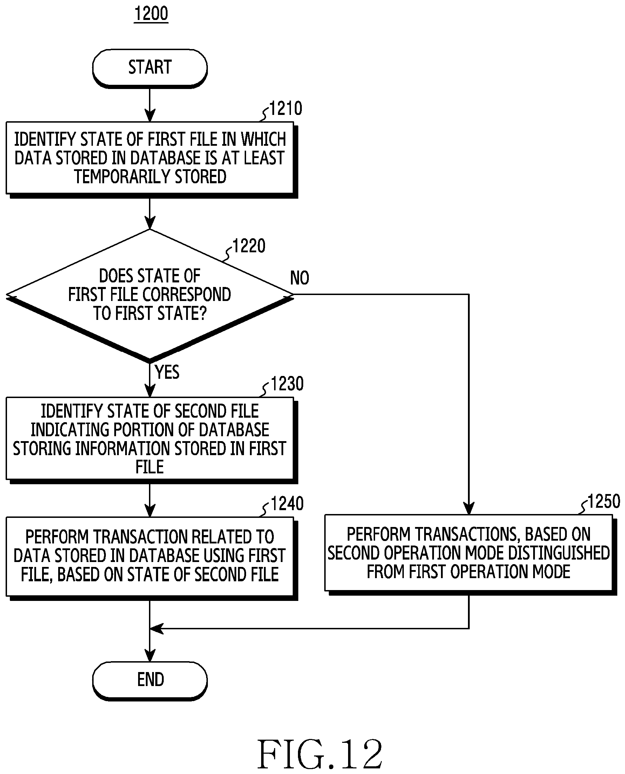

FIG. 12 is a flowchart 1200 illustrating an operation performed by an electronic device according to an embodiment of the disclosure.

The electronic device in FIG. 12 may correspond to the electronic device 101 in FIGS. 1, 3A, and 3B. The operations in FIG. 12 may be performed by the electronic device 101 and/or the processor 120 shown in FIGS. 1, 3A, and 3B. The operations in FIG. 12 may be performed based on the DB manager 211 and the data log & recovery manager 315 in FIG. 3A. Hardware components, a database, and at least one file described in the embodiment in FIG. 12 may correspond to the hardware components, the database 330, and at least one file (e.g., the first file 340 and the second file 350) shown in FIGS. 1, 3A, and 3B. At least one of the operations in FIG. 12 may be related to at least one of the operations in FIG. 4, or may be performed in a manner similar thereto.

Referring to FIG. 12, in operation 1210, an electronic device according to various embodiments may identify the state of a first file in which data stored in a database is at least temporarily stored. An electronic device according to an embodiment may identify the state of a first file, such as a WAL file in which modified data of the database is stored, in a partition of a storage in which the database is stored. The electronic device may perform operation 1210 in response to reception of a request for opening or activating a database from a running application and/or service. For example, the electronic device may perform operation 1210 in FIG. 12 in a similar manner to operations 415, 420, and 425 in FIG. 4 and/or operation 610 in FIG. 6.

Referring to FIG. 12, in operation 1220, the electronic device according to various embodiments may determine whether or not the identified state of the first file corresponds to a specified first state. The first state may denote the state in which the first file is stored in the storage and in which the first file can be opened or information on the first file can be read. For example, the electronic device may perform operation 1210 in FIG. 12 in a manner similar to operation 425 in FIG. 4 and/or operation 620 in FIG. 6.

If the state of the first file corresponds to the specified first state ("Yes" in operation 1220), the electronic device according to various embodiments may identify the state of a second file indicating a portion of the database that is to store information stored in the first file in operation 1230. The second file may correspond to a WAL-index file that stores mapping information. The electronic device may identify the second file and the state of the second file in a partition of the storage in which the database and/or the first file are stored. The electronic device may perform operation 1230 in FIG. 12 in a manner similar to operation 430 in FIG. 4 and/or operation 630 in FIG. 6.

Referring to FIG. 12, in operation 1240, the electronic device according to various embodiments may perform a transaction related to data stored in the database using the first file, based on the state of the second file. For example, if the state of the second file corresponds to the specified first state, the electronic device may perform a transaction received from an application and/or a service using the first file and the second file. If the state of the second file corresponds to a second state different from the specified first state, the electronic device may perform only a transaction related to a read operation, among the transactions received from the application and/or the service, and may restrict execution of transactions related to the operations other than the read operation. In an embodiment, the second state may denote the state in which the second file is not stored in the storage or in which the information on the second file cannot be read. The electronic device may perform operation 1240 in FIG. 12 in a manner similar to operations 430, 435, 440, and 465 in FIG. 4 and/or operations 640, 650, and 660 in FIG. 6.

If the first file does not correspond to the first state ("No" in operation 1220), the electronic device according to various embodiments may perform transactions, based on a second operation mode different from the first operation mode in operation 1250. For example, if the state of the first file corresponds to the second state, the electronic device may switch to the second operation mode. The first operation mode and the second operation mode may correspond to an operation mode based on a WAL scheme and an operation mode based on a roll-back scheme, respectively. The electronic device may perform operation 1250 in FIG. 12 in a manner similar to operations 445, 450, 455, and 460 in FIG. 4, operation 670 in FIG. 6, and/or the operations in FIG. 11.

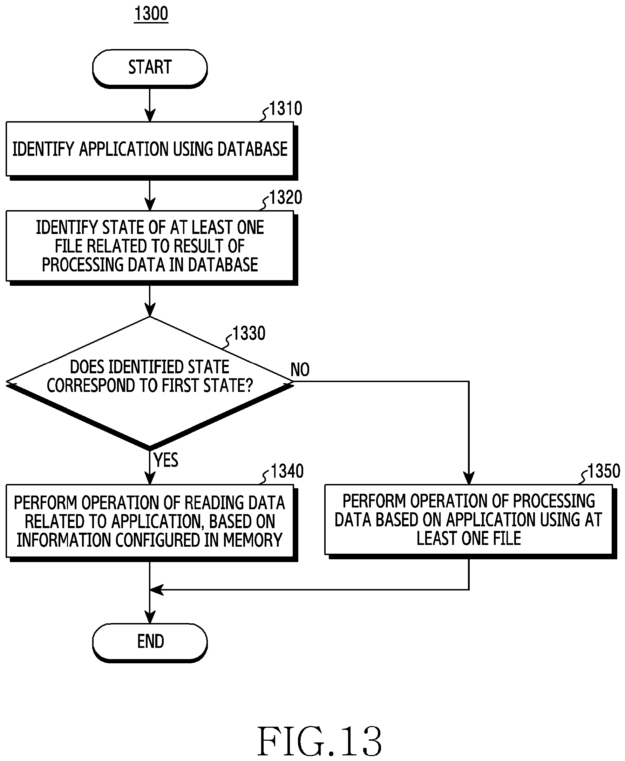

FIG. 13 is a flowchart 1300 illustrating an operation performed by an electronic device according to an embodiment of the disclosure.

The electronic device in FIG. 13 may correspond to the electronic device 101 in FIGS. 1, 3A, and 3B. The operations in FIG. 13 may be performed by the electronic device 101 and/or the processor 120 shown in FIGS. 1, 3A, and 3B. The operations in FIG. 13 may be performed based on the DB manager 211 and the data log & recovery manager 315 in FIG. 3A. Hardware components, a database, and at least one file described in the embodiment in FIG. 13 may correspond to the hardware components, the database 330, and at least one file (e.g., the first file 340 and the second file 350) shown in FIGS. 1, 3A, and 3B. At least one of the operations in FIG. 13 may be related to at least one of the operations in FIG. 4, or may be performed in a manner similar thereto.

Referring to FIG. 13, in operation 1310, an electronic device according to various embodiments may identify an application using a database. The database may be stored in a storage. The application may be installed in the storage. In an embodiment, the electronic device may identify a request for opening or activating the database for using the same from a running application. In an embodiment, the electronic device may identify an application that uses a database stored in the storage.

In operation 1320, the electronic device according to various embodiments may identify the state of at least one file related to a result of processing data in the database. The at least one file may be a file used to operate the database, based on a WAL scheme. The at least one file may be stored in a partition of the storage in which the database is stored. In an embodiment, in response to identifying the application using the database, the electronic device may identify the state of at least one file related to a result of processing data in the database.

In an embodiment, the electronic device may identify the state of a first file (e.g., the first file 340 in FIGS. 3A and 3B) for at least temporarily storing modified data of the database. The first file may correspond to, for example, a WAL file. In an embodiment, the electronic device may identify the state of a second file (e.g., the second file 350 in FIGS. 3A and 3B) for storing information indicating a portion of the database in the storage in which a result of the first file is to be stored (e.g., mapping information). The second file may correspond to, for example, a WAL index file.

In operation 1330, the electronic device according to various embodiments may determine whether or not the identified state corresponds to a specified first state. The first state may denote the state that does not allow production or modification of the at least one file. The first state may denote the state in which the at least one file is not stored in the memory. For example, if the partition including the at least one file is mounted in a read-only mode, or if the capacity of the partition is insufficient, the state of the at least one file may correspond to the first state. A second state, which is different from the first state, may denote the state in which production and modification of the at least one file are allowed.

If the state of at least one file corresponds to the first state ("Yes" in operation 1330), the electronic device according to various embodiments may perform an operation of reading data related to an application, based on information configured in the memory in operation 1340. In an embodiment, in response to identifying the state of at least one file corresponding to the first state, the electronic device may perform a read operation with respect to data related to an application, based on information configured in the memory. The information may be related at least in part to a file lock indicating that the database has been opened or activated so as to allow only a read operation to be performed.

The information may indicate that a read operation related to the application identified in operation 1310 is to be performed, and may be added to a specified area of the memory (e.g., the portion 1020 in FIG. 10A). In an embodiment, in response to adding the information to the specified area, the electronic device may perform the read operation. The read operation may be included in the transaction obtained based on the application.

In the state in which the state of at least one file corresponding to the first state is identified, the electronic device according to an embodiment may identify a change in the state of the at least one file. For example, in response to identifying the state of the at least one file, which is changed from the first state to the second state, the electronic device may perform an operation of processing the data, based on the application using the at least one file. For example, in response to identifying the state of at least one file corresponding to the first state, the electronic device may identify a portion related to the application in the memory (e.g., the volatile memory 132 in FIGS. 1 to 3A), which is different from the storage. In response to identifying the portion of the memory, the electronic device may produce at least one file in the portion of the memory. The portion of the memory may include a heap area and/or a heap memory allocated to the application.

If the state of the at least one file does not correspond to the first state ("No" in operation 1330), the electronic device according to various embodiments may perform an operation of processing data based on the application in operation 1350. In an embodiment, in response to identifying the state of the at least one file corresponding to a second state different from the first state, the electronic device may perform an operation of processing data, based on the application, using the at least one file. The second state may denote the state in which at least one file exists and can be read or opened. For example, in response to identifying the state of at least one file corresponding to the second state different from the first state, the electronic device may store a result of executing an operation of processing data of the database in the at least one file. For example, the electronic device may store the result in a first file for at least temporarily storing a result of processing data in the database. Based on the size of the first file and a specified threshold, the electronic device may store the result stored in the first file in the database in the storage.

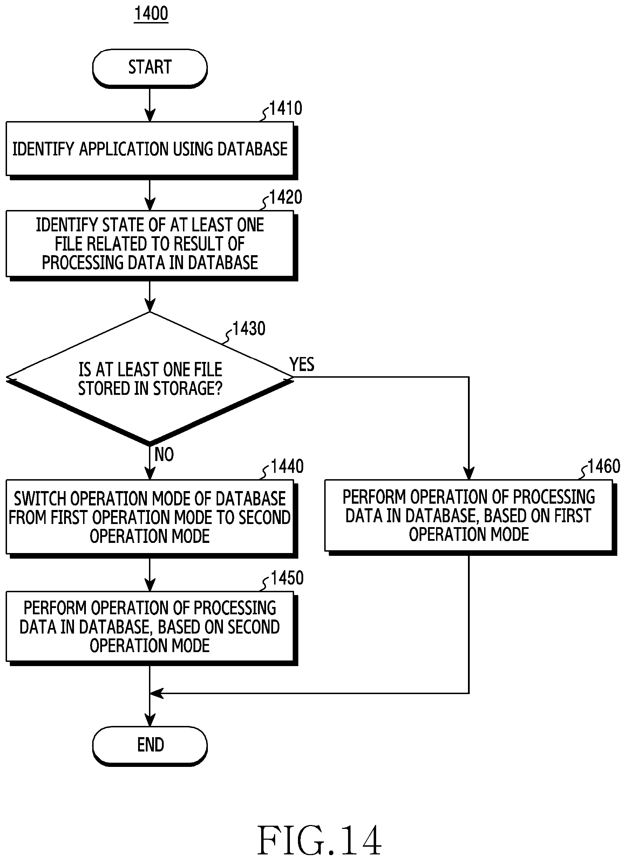

FIG. 14 is a flowchart 1400 illustrating an operation performed by an electronic device according to an embodiment of the disclosure.

The electronic device in FIG. 14 may correspond to the electronic device 101 in FIGS. 1, 3A, and 3B. The operations in FIG. 14 may be performed by the electronic device 101 and/or the processor 120 shown in FIGS. 1, 3A, and 3B. The operations in FIG. 14 may be performed based on the DB manager 211 and the data log & recovery manager 315 in FIG. 3A. Hardware components, a database, and at least one file described in the embodiment in FIG. 14 may correspond to the hardware components, the database 330, and at least one file (e.g., the first file 340 and the second file 350) shown in FIGS. 1, 3A, and 3B. At least one of the operations in FIG. 14 may be related to at least one of the operations in FIG. 4 and/or FIG. 13, or may be performed in a manner similar thereto.

Referring to FIG. 14, in operation 1410, an electronic device according to various embodiments may identify an application using a database. The electronic device may perform operation 1410 in FIG. 14 in a manner similar to operation 1310 in FIG. 13. In operation 1420, the electronic device may identify the state of at least one file (e.g., the first file 340 and the second file 350 in FIG. 3A) related to a result of processing data in a database in a storage. The electronic device may perform operation 1420 in FIG. 14 in a manner similar to operation 1320 in FIG. 13. In an embodiment, the database may operate based on a first operation mode.

The first operation mode may correspond to a write-ahead logging (WAL) mode in which a result of processing data in the database is stored in at least one file and in which the database in the memory is modified according to the stored result, based on a specified condition. The at least one file related to the result of processing the data in the database may include a first file including a result of processing the data in the database, based on at least one operation, and a second file matching the result in the memory to the position of a portion of the database related thereto.

In operation 1430, the electronic device according to various embodiments may determine whether or not at least one file is stored in the storage. If at least one file is not stored in the memory ("No" in operation 1430), the electronic device according to various embodiments may switch the operation mode of the database from a first operation mode to a second operation mode in operation 1440. The second operation mode may correspond to a roll-back mode in which the database in the memory is restored to the state before processing the database, based on an error occurring in processing the database in the memory.

In an embodiment, in response to identifying that at least one file is not stored in the storage, the electronic device may identify the operation mode of the database. In response to identifying the operation mode corresponding to the first operation mode in which the database operates based on at least one file, the electronic device may switch the operation mode of the database from the first operation mode to the second operation mode. For example, in response to identifying the operation mode corresponding to the first operation mode, the electronic device may obtain information used for access to a database. The information may be related to file locks and/or exclusive locks used for access to a database stored in the storage and/or a header of the database. In response to obtaining the information, the electronic device may switch the operation mode of the database from the first operation mode to the second operation mode. For example, the electronic device may input at least one parameter based on the second operation mode to a specified area of the header of the database.

In response to the operation mode switched to the second operation mode, the electronic device may perform synchronization of the database stored in the memory, based on the second operation mode. After executing the synchronization, the electronic device may stop accessing the database in the memory, based on the obtained information.

Referring to FIG. 14, in operation 1450, the electronic device according to various embodiments may perform an operation of processing data in a database, based on the second operation mode. Since the operation of processing the data in the database is performed based on the second operation mode, even if the at least one file related to the first operation mode does not exist in the storage, the electronic device may ensure the execution of an operation of processing the data in the database.

If at least one file is stored in the memory ("Yes" in operation 1430), the electronic device according to various embodiments may perform an operation of processing the data in the database, based on the first operation mode in operation 1460. The type of processing operation performed by the electronic device may be related to the state of at least one file. In an embodiment, in response to identifying at least one file in the first state that allows modification of at least one file, the electronic device may perform at least one operation for processing data in the database, based on the at least one file. In response to identifying at least one file in the second state different from the first state, the electronic device may restrict processing operations different from the read operation with respect to the data in the database, such as an operation of modifying data, an operation of deleting data, and an operation of adding data.

According to various embodiments, the electronic device may identify the state of at least one file used to process data in the database based on a WAL scheme while opening or activating the database operating based on the WAL scheme. If the at least one file is not in the state suitable for processing data in the database, the electronic device may ensure limited execution of a processing operation related to data in the database. The electronic device may ensure the execution of a read operation among the processing operations, and may restrict the execution of operations other than the read operation.

In the state of ensuring the limited execution of the processing operations, the electronic device may add lock information for exclusively executing a read operation in an area (e.g., a specified area of the memory) that is different from the at least one file. The lock information may be used to prevent a plurality of applications and/or services from concurrently accessing data in a database.

In the state of ensuring the limited execution of the processing operations, the electronic device may consistently monitor the state of the at least one file. For example, whenever the processing operation and/or transaction is identified from an application and/or service running in the electronic device, the electronic device may check the state of the at least one file. If the at least one file enters the state suitable for processing data in a database, the electronic device may ensure execution of all processing operations including a read operation.

If the at least one file is not in the state suitable for processing data in a database, the electronic device according to an embodiment may switch from a first operation mode based on a WAL scheme to a second operation mode based on a roll-back scheme.

An electronic device according to various embodiments may include: a storage configured to store a database; a memory; and at least one processor operably connected to the storage and the memory, wherein the memory may store a plurality of instructions that, when executed, cause the at least one processor to: identify the state of a first file stored in the storage and configured to at least temporarily store data stored in the database, the first file related to a first operation mode of the database; in response to identifying the first file in a first state that allows reading data included in a file, identify the state of a second file that stores information indicating a portion of the database to store information stored in the first file; perform transactions related to data stored in the database using the first file, based at least in part on the identified state of the second file; and in response to identifying the first file in a second state different from the first state, perform the transactions, based on a second operation mode different from the first operation mode.

According to an embodiment, the plurality of instructions, when executed, may cause the at least one processor to restrict execution of transactions related to an operation of modifying the data, an operation of deleting the data, and an operation of adding the data in response to identifying the second file in the second state that does not allow modification of the file.

According to an embodiment, the plurality of instructions, when executed, may cause the at least one processor to add, to a specified portion of the memory, information indicating that execution of transactions related to operations other than the read operation with respect to the data is restricted in response to identifying the second file in the second state.

According to an embodiment, the plurality of instructions, when executed, may cause the at least one processor to: in response to the addition of the information to the specified portion, perform transactions related to the read operation with respect to the data in the database; and after the execution of the transaction related to the read operation is completed, remove the information added to the portion.

According to an embodiment, the first file may include data in the database, which is modified by the transaction, and the second file may include information indicating the position in which data stored in the first file is to be stored in the storage.

According to an embodiment, the plurality of instructions, when executed, may cause the at least one processor to produce the second file in the memory in response to identifying the second file in the second state, and the second file may be produced in a portion of the memory related to an application for processing data in the database while the application is executed by the at least one processor.

According to an embodiment, the plurality of instructions, when executed, may cause the at least one processor to: in response to identifying that the first file is not stored in the storage, identify an operation mode of the database; in response to identifying the operation mode corresponding to the first operation mode in which the database operates, based on the first file and the second file, produce the first file in the storage; and in response to identifying that the first file fails to be produced, switch the operation mode of the database from the first operation mode to the second operation mode different from the first operation mode.

According to an embodiment, the plurality of instructions, when executed, may cause the at least one processor to: in response to identifying that the first file fails to be produced, obtain information for modifying a database stored in the storage; in response to obtaining the information, switch the operation mode of the database from the first operation mode to the second operation mode; and perform synchronization of the database stored in the storage, based on the second operation mode.

A method of operating an electronic device according to various embodiments may include: identifying an application that uses a database stored in a storage of the electronic device; in response to identifying the application, identifying the state of at least one file related to a result of processing data in the database; in response to identifying the state of the at least one file corresponding to a first state that does not allow production or modification of the at least one file, executing a read operation with respect to the data related to the application, based on the information configured in a memory of the electronic device; and in response to identifying the state of the at least one file corresponding to a second state different from the first state, executing an operation of processing the data, based on the application, using the at least one file.

According to an embodiment, the identifying the state of the at least one file may include: identifying the state of a first file for at least temporarily storing modified data of the database; and identifying the state of a second file for storing information indicating a portion of the database in the storage in which data of the first file is to be stored.

The method of operating an electronic device according to an embodiment may further include storing the result stored in the first file in the database in the storage, based on the size of the first file and a specified threshold.

According to an embodiment, the executing the read operation, based on the information, may include: adding a parameter corresponding to the information indicating that the read operation is performed to a specified area of the memory; and in response to the addition of the parameter, executing the read operation, and the parameter added to the specified area may indicate that the database has been activated so as to restrict execution of processing operations other than the read operation.

According to an embodiment, the executing the read operation, based on the information, may include: identifying a change in the state of the at least one file in the state in which the state of the at least one file corresponding to the first state is identified; and in response to identifying the state of the at least one file changed from the first state to the second state, executing the operation of processing the data, based on the application, using the at least one file.

The method according to an embodiment may further include: in response to identifying the state of the at least one file corresponding to the first state, identifying a portion related to the application in the memory; and producing the at least one file in the portion of the memory.

The method according to an embodiment may further include storing a result of executing the operation of processing data in the database in the at least one file in response to identifying the state of the at least one file corresponding to the second state.

An electronic device according to various embodiments may include: a storage; a memory; and at least one processor operably connected to the storage and the memory, wherein the at least one processor may be configured to, identify, from the storage, the state of at least one file used for access to a database stored in the storage, in response to identifying that the at least one file is not stored in the storage, identify an operation mode of the database, and in response to identifying the operation mode corresponding to a first operation mode in which the database operates based on the at least one file, switch the operation mode of the database from the first operation mode to a second operation mode different from the first operation mode.

According to an embodiment, the first operation mode may correspond to a write-ahead logging (WAL) mode in which a result of processing data in the database is stored in the at least one file and in which the database in the storage is modified according to the stored result, based on a specified condition, and the second operation mode may correspond to a roll-back mode in which the database in the memory is restored to the state before processing the database, based on an error occurring in processing the database in the storage.

According to an embodiment, the at least one file may include: a first file configured to store data in the database, which is modified based on the at least one operation; and a second file indicating the position of a portion of the database related to data of the first file in the storage.

According to an embodiment, the at least one processor may be configured to: in response to identifying the operation mode corresponding to the first operation mode, obtain information used for access to the database stored in the storage; in response to obtaining the information, switch the operation mode of the database from the first operation mode to the second operation mode; based on the second operation mode, perform synchronization of the database stored in the storage; and after performing the synchronization, stop accessing the database in the storage, based on the obtained information.

According to an embodiment, the at least one processor may be configured to: in response to identifying the at least one file in a first state that allows modification of the at least one file, perform at least one operation for processing data in the database, based on the at least one file; and in response to identifying the at least one file in a second state different from the first state, restrict an operation of modifying the data, an operation of deleting the data, and an operation of adding the data, which are different from the read operation with respect to the data.

Methods according to embodiments described in the claims or specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), or other type optical storage devices, or a magnetic cassette. Alternatively, any combination of some or all may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, a component included in the disclosure is expressed in the singular or the plural according to a presented detailed embodiment. However, the singular form or plural form is selected for convenience of description suitable for the presented situation, and various embodiments of the disclosure are not limited to a single element or multiple elements thereof. Further, either multiple elements expressed in the description may be configured into a single element or a single element in the description may be configured into multiple elements.

While the disclosure has been shown and described with reference to various embodiments thereof, it will be understood by those skilled in the art that various changes in form and details may be made therein without departing from the scope of the disclosure as defined by the appended claims.

## Claims

1. An electronic device (101) comprising:
a storage configured to store a database (330);
a memory (130); and
at least one processor (120) operably connected to the storage and the memory (130),
wherein the memory (130) is configured to store a plurality of instructions that, when executed, cause the at least one processor to:
identify a state of a Write-Ahead Logging, WAL, file (340) that is at least temporarily storing modified data corresponding to data stored in the database (330), wherein the WAL file (340) is related to a first operation mode of the database (330) based on a WAL scheme,
in response to identifying the WAL file (340) in a first state that allows reading data included in the WAL file, identify a state of a WAL index file (350) that stores information indicating a portion of the database (330) to store the data stored in the WAL file (340), and, in response to identifying the WAL index file (350) in a first state indicating that data included in the WAL index file is allowed to be read, perform transactions related to an operation of modifying the data stored in the database (330), an operation of reading the data stored in the database (330), an operation of deleting the data stored in the database (330) and/or an operation of adding to the data stored in the database (330), wherein the transactions are performed using the WAL file (340) and the WAL index file (350), and
in response to identifying the WAL file (340) in a second state different from the first state that does not allow reading data included in the WAL file, perform the transactions, based on a second operation mode of the database (330) based on a roll-back scheme.

2. The electronic device (101) of claim 1, wherein the plurality of instructions, when executed, cause the at least one processor (120) to restrict execution of transactions related to the operation of modifying the data, the operation of deleting the data, and the operation of adding the data in response to identifying the WAL index file (350) in a second state that does not allow modification of the WAL index file.

3. The electronic device (101) of claim 2, wherein the plurality of instructions, when executed, cause the at least one processor (120) to add, to a specified portion of the memory (130), information indicating that execution of transactions related to operations other than the operation of reading the data is restricted in response to identifying the WAL index file (350) in the second state.

4. The electronic device (101) of claim 3, wherein the plurality of instructions, when executed, cause the at least one processor (120) to:
in response to the addition of the information to the specified portion, perform transactions related to the operation of reading the data; and
after the execution of the transaction related to the operation of reading the data is completed, remove the information added to the portion.

5. The electronic device (101) of any of the previous claims,
wherein the WAL file (340) comprises data in the database (330), which is modified by the transaction, and
wherein the WAL index file (350) comprises information indicating a position in which data stored in the WAL file (340) is to be stored in the storage.

6. The electronic device (101) of claim 5,
wherein the plurality of instructions, when executed, cause the at least one processor (120) to produce the WAL index file (350) in the memory in response to identifying the WAL index file (350) in the second state, and
wherein the WAL index file (350) is produced in a portion of the memory related to an application for processing data in the database (330) while the application is executed by the at least one processor (120).

7. The electronic device (101) of any of the previous claims, wherein the plurality of instructions, when executed, cause the at least one processor (120) to:
in response to identifying that the WAL file (340) is not stored in the storage, identify an operation mode of the database (330);
in response to identifying the operation mode corresponding to the first operation mode in which the database (330) operates, based on the WAL file (340) and the WAL index file (350), produce the WAL file (340) in the storage; and
in response to identifying that the WAL file (340) fails to be produced, switch the operation mode of the database (330) from the first operation mode to the second operation mode different from the first operation mode;
wherein the first operation mode is based on the WAL scheme and the second operation mode is based on the roll-back scheme.

8. The electronic device (101) of claim 7, wherein the plurality of instructions, when executed, cause the at least one processor (120) to:
in response to identifying that the WAL file (340) fails to be produced, obtain information for modifying the database (330) stored in the storage;
in response to obtaining the information, switch the operation mode of the database (330) from the first operation mode to the second operation mode; and
perform synchronization of the database (330) stored in the storage, based on the second operation mode.

9. A method of operating an electronic device, the method comprising:
identifying (1310) an application that uses a database stored in a storage of the electronic device;
in response to identifying the application, identifying (1320; 610) a state of a Write-Ahead Logging, WAL, file for at least temporarily storing modified data corresponding to data stored in the database;
in response to identifying the state of the WAL file corresponding to a state that allows modification of the WAL file (620: Y), identifying (1320; 640) a state of a WAL index file for storing information indicating a portion of the database in the storage in which data of the WAL file is to be stored;
in response to identifying the state of the WAL index file corresponding to a first state that does not allow modification of the WAL index file (1330:Y; 640:Y), executing (1340, 650) a read operation with respect to data related to the application, based on a file lock indicating that the database has been opened or activated so as to allow only a read operation to be performed; and
in response to identifying the state of the WAL index file corresponding to a second state that does allow modification of the WAL index file (1330:N), executing (1350) an operation of processing the data, based on the application, using the WAL file and the WAL index file.

10. The method of claim 9, further comprising:
storing the result stored in the WAL file in the database in the storage, based on the size of the WAL file and a specified threshold.

11. The method of any of claims 9-10,
wherein executing the read operation, based on the information, comprises:
adding a parameter corresponding to the information indicating that the read operation is performed to a specified area of the memory; and
in response to the addition of the parameter, executing the read operation, and
wherein the added parameter indicates that the database has been activated so as to restrict execution of processing operations other than the read operation.

12. The method of any of claims 9-11, wherein the executing the read operation, based on the information, comprises:
identifying a change in the state of the WAL index file in the state in which the state of the WAL index file corresponding to the first state is identified; and
in response to identifying the state of the WAL index file changed from the first state to the second state, executing the operation of processing the data, based on the application, using the WAL file and the WAL index file.

13. The method of any of claims 9-12, further comprising:
in response to identifying the state of the WAL file corresponding to the state, identifying a portion related to the application in the memory; and
producing the WAL file in the portion of the memory.

14. The method of any of claims 9-13, further comprising:
storing a result of executing the operation of processing the data in the database in the WAL index file in response to identifying the state of the WAL index file corresponding to the second state.

## Patentansprüche

1. Elektronische Vorrichtung (101), die Folgendes umfasst:
ein Speichereinrichtung, die zum Speichern einer Datenbank (330) konfiguriert ist;
einen Speicher (130); und
mindestens einen mit der Speichereinrichtung und dem Speicher (130) betriebsmäßig gekoppelten Prozessor (120),
wobei der Speicher (130) so konfiguriert ist, dass er eine Vielzahl von Anweisungen speichert, die, wenn sie ausgeführt werden, den mindestens einen Prozessor zu Folgendem veranlassen:
Identifizieren eines Zustands einer WAL-Datei (Write-Ahead-Logging) (340), die modifizierte Daten entsprechend den in der Datenbank (330) gespeicherten Daten zumindest temporär speichert, wobei sich die WAL-Datei (340) auf einen ersten Betriebsmodus der Datenbank (330) bezieht, basierend auf einem WAL-Schema,
als Reaktion auf das Identifizieren der WAL-Datei (340) in einem ersten Zustand, der das Lesen von Daten zulässt, die in der WAL-Datei enthalten sind, Identifizieren eines Zustands einer WAL-Indexdatei (350), die Informationen speichert, die einen Abschnitt der Datenbank (330) angeben, der die in der WAL-Datei (340) gespeicherten Daten speichert, und als Reaktion auf das Identifizieren der WAL-Indexdatei (350) in einem ersten Zustand, der anzeigt, dass Daten, die in der WAL-Indexdatei enthalten sind, gelesen werden dürfen, Durchführen von Transaktionen in Bezug auf einen Betrieb zum Modifizieren der in der Datenbank (330) gespeicherten Daten, einen Betrieb zum Lesen der in der Datenbank (330) gespeicherten Daten, einen Betrieb zum Löschen der in der Datenbank (330) gespeicherten Daten und/oder einen Betrieb zum Hinzufügen zu den in der Datenbank gespeicherten Daten (330), wobei die Transaktionen unter Verwendung der WAL-Datei (340) und der WAL-Indexdatei (350) durchgeführt werden, und
als Reaktion auf das Identifizieren der WAL-Datei (340) in einem zweiten Zustand, der sich von dem ersten Zustand unterscheidet und das Lesen von Daten, die in der WAL-Datei enthalten sind, nicht zulässt, Durchführen der Transaktionen basierend auf einem zweiten Betriebsmodus der Datenbank (330), der auf einem Rollback-Schema basiert.

2. Elektronische Vorrichtung (101) nach Anspruch 1, wobei die Vielzahl von Anweisungen, wenn sie ausgeführt werden, veranlassen, dass der mindestens eine Prozessor (120) die Ausführung von Transaktionen in Bezug auf den Betrieb des Modifizierens der Daten, den Betrieb des Löschens der Daten und den Betrieb des Hinzufügens der Daten beschränkt, als Reaktion auf das Identifizieren der WAL-Indexdatei (350) in einem zweiten Zustand, der eine Modifikation der WAL-Indexdatei nicht zulässt.

3. Elektronische Vorrichtung (101) nach Anspruch 2, wobei die Vielzahl von Anweisungen, wenn sie ausgeführt werden, veranlassen, dass der mindestens eine Prozessor (120) zu einem spezifizierten Abschnitt des Speichers (130) Informationen hinzufügt, die angeben, dass die Ausführung von Transaktionen in Bezug auf andere Betriebe als den Betrieb des Lesens der Daten beschränkt ist, als Reaktion auf das Identifizieren der WAL-Indexdatei (350) in dem zweiten Zustand.

4. Elektronische Vorrichtung (101) nach Anspruch 3, wobei die Vielzahl von Anweisungen, wenn sie ausgeführt werden, den mindestens einen Prozessor (120) zu Folgendem veranlassen:
als Reaktion auf das Hinzufügen der Informationen zu dem spezifizierten Abschnitt, Durchführen von Transaktionen, die sich auf den Betrieb des Lesens der Daten beziehen; und
nachdem die Ausführung der Transaktion, die sich auf den Betrieb des Lesens der Daten bezieht, abgeschlossen ist, Entfernen der dem Abschnitt hinzugefügten Informationen.

5. Elektronische Vorrichtung (101) nach einem der vorhergehenden Ansprüche,
wobei die WAL-Datei (340) Daten in der Datenbank (330) umfasst, die durch die Transaktion modifiziert werden, und
wobei die WAL-Indexdatei (350) Informationen umfasst, die eine Position angeben, an der in der WAL-Datei (340) gespeicherte Daten in der Speichereinrichtung zu speichern sind.

6. Elektronische Vorrichtung (101) nach Anspruch 5,
wobei die Vielzahl von Anweisungen, wenn sie ausgeführt werden, den mindestens einen Prozessor (120) veranlassen, die WAL-Indexdatei (350) in dem Speicher als Reaktion auf das Identifizieren der WAL-Indexdatei (350) im zweiten Zustand zu erzeugen, und
wobei die WAL-Indexdatei (350) in einem Abschnitt des Speichers erzeugt wird, der sich auf eine Anwendung zum Verarbeiten von Daten in der Datenbank (330) bezieht, während die Anwendung von dem mindestens einen Prozessor (120) ausgeführt wird.

7. Elektronische Vorrichtung (101) nach einem der vorhergehenden Ansprüche, wobei die Vielzahl von Anweisungen, wenn sie ausgeführt werden, den mindestens einen Prozessor (120) zu Folgendem veranlassen:
als Reaktion auf das Identifizieren, dass die WAL-Datei (340) nicht in der Speichereinrichtung gespeichert ist, Identifizieren eines Betriebsmodus der Datenbank (330);
als Reaktion auf das Identifizieren des Betriebsmodus entsprechend dem ersten Betriebsmodus, in dem die Datenbank (330) arbeitet, basierend auf der WAL-Datei (340) und der WAL-Indexdatei (350), Erzeugen der WAL-Datei (340) in der Speichereinrichtung; und
als Reaktion auf das Identifizieren, dass die WAL-Datei (340) nicht erzeugt werden kann, Umschalten des Betriebsmodus der Datenbank (330) von dem ersten Betriebsmodus in den zweiten Betriebsmodus, der sich von dem ersten Betriebsmodus unterscheidet;
wobei der erste Betriebsmodus auf dem WAL-Schema basiert und der zweite Betriebsmodus auf dem Rollback-Schema basiert.

8. Elektronische Vorrichtung (101) nach Anspruch 7, wobei die Vielzahl von Anweisungen, wenn sie ausgeführt werden, den mindestens einen Prozessor (120) zu Folgendem veranlassen:
als Reaktion auf das Identifizieren, dass die WAL-Datei (340) nicht erzeugt werden kann, Erhalten von Informationen zum Modifizieren der in der Speichereinrichtung gespeicherten Datenbank (330);
als Reaktion auf das Erhalten der Informationen, Umschalten des Betriebsmodus der Datenbank (330) aus dem ersten Betriebsmodus in den zweiten Betriebsmodus; und
Durchführen einer Synchronisierung der in der Speichereinrichtung gespeicherten Datenbank (330) basierend auf dem zweiten Betriebsmodus.

9. Verfahren zum Betrieb einer elektronischen Vorrichtung, wobei das Verfahren Folgendes umfasst:
Identifizieren (1310) einer Anwendung, die eine in einer Speichereinrichtung der elektronischen Vorrichtung gespeicherte Datenbank verwendet;
als Reaktion auf das Identifizieren der Anwendung, Identifizieren (1320; 610) eines Zustands einer WAL-Datei (Write Ahead Logging) zum wenigstens vorübergehenden Speichern modifizierter Daten, die den in der Datenbank gespeicherten Daten entsprechen;
als Reaktion auf das Identifizieren des Zustands der WAL-Datei, der einem Zustand entspricht, der eine Modifikation der WAL-Datei zulässt (620: JA), Identifizieren (1320; 640) eines Zustands einer WAL-Indexdatei zum Speichern von Informationen, die einen Abschnitt der Datenbank in der Speichereinrichtung angeben, in der Daten der WAL-Datei zu speichern sind;
als Reaktion auf das Identifizieren des Zustands der WAL-Indexdatei, der einem ersten Zustand entspricht, der eine Modifikation der WAL-Indexdatei nicht zulässt (1330:JA; 640:JA), Ausführen (1340, 650) eines Lesebetriebs in Bezug auf Daten, die sich auf die Anwendung beziehen, basierend auf einer Dateisperre, die angibt, dass die Datenbank geöffnet oder aktiviert wurde, um zuzulassen, dass nur ein Lesebetrieb durchgeführt wird; und
als Reaktion auf das Identifizieren des Zustands der WAL-Indexdatei, der einem zweiten Zustand entspricht, der eine Modifikation der WAL-Indexdatei zulässt (1330: NEIN), Ausführen (1350) eines Betriebs zum Verarbeiten der Daten basierend auf der Anwendung unter Verwendung der WAL-Datei und der WAL-Indexdatei.

10. Verfahren nach Anspruch 9, das ferner Folgendes umfasst:
Speichern des in der WAL-Datei gespeicherten Ergebnisses in der Datenbank in der Speichereinrichtung, basierend auf der Größe der WAL-Datei und einem festgelegten Schwellenwert.

11. Verfahren nach einem der Ansprüche 9 und 10,
wobei das Ausführen des Lesebetriebs basierend auf den Informationen Folgendes umfasst:
Hinzufügen eines Parameters, der den Informationen entspricht, die anzeigen, dass der Lesebetrieb durchgeführt wird, zu einem spezifizierten Bereich des Speichers; und
als Reaktion auf das Hinzufügen des Parameters, Ausführen des Lesebetriebs, und
wobei der hinzugefügte Parameter anzeigt, dass die Datenbank aktiviert wurde, um die Ausführung von anderen Verarbeitungsbetrieben als dem Lesebetrieb einzuschränken.

12. Verfahren nach einem der Ansprüche 9 bis 11, wobei das Ausführen des Lesebetriebs basierend auf den Informationen Folgendes umfasst:
Identifizieren einer Änderung des Zustands der WAL-Indexdatei, wenn der Zustand der WAL-Indexdatei, der dem ersten Zustand entspricht, identifiziert ist; und
als Reaktion auf das Identifizieren, dass sich der Zustand der WAL-Indexdatei aus dem ersten in den zweiten Zustand geändert hat, Ausführen des Betriebs zum Verarbeiten der Daten basierend auf der Anwendung unter Verwendung der WAL-Datei und der WAL-Indexdatei.

13. Verfahren nach einem der Ansprüche 9 bis 12, das ferner Folgendes umfasst:
als Reaktion auf das Identifizieren des Zustands der WAL-Datei, der dem Zustand entspricht, Identifizieren eines Abschnitts, der sich auf die Anwendung in dem Speicher bezieht; und
Erzeugen der WAL-Datei in dem Abschnitt des Speichers.

14. Verfahren nach einem der Ansprüche 9 bis 13, das ferner Folgendes umfasst:
Speichern eines Ergebnisses des Ausführens des Betriebs zum Verarbeiten der Daten in der Datenbank in der WAL-Indexdatei als Reaktion auf das Identifizieren des Zustands der WAL-Indexdatei, der dem zweiten Zustand entspricht.

## Revendications

1. Appareil électronique (101) comprenant :
un dispositif de stockage conçu pour contenir une base de données (330),
une mémoire (130), et
au moins un processeur (120) relié de manière fonctionnelle au dispositif de stockage et à la mémoire (130) ;
ladite mémoire (130) étant conçue pour contenir une pluralité d'instructions qui, lorsqu'elles sont exécutées, amènent l'au moins un processeur à :
identifier l'état d'un fichier WAL (Write-Ahead Logging) (340) contenant au moins temporairement des données modifiées correspondant à des données stockées dans la base de données (330), ledit fichier WAL (340) étant en lien avec un premier mode de fonctionnement de la base de données (330) reposant sur un schéma WAL,
en réaction à l'identification du fait que le fichier WAL (340) est dans un premier état permettant la lecture de données présentes dans le fichier WAL, identifier l'état d'un fichier index WAL (350) contenant des informations indiquant une partie de la base de données (330) destinée à contenir les données stockées dans le fichier WAL (340) et, en réaction à l'identification du fait que le fichier index WAL (350) est dans un premier état indiquant que les données présentes dans le fichier index WAL peuvent être lues, réaliser des transactions en lien avec une opération visant à modifier les données stockées dans la base de données (330), une opération visant à lire les données stockées dans la base de données (330), une opération visant à effacer les données stockées dans la base de données (330) et/ou une opération visant à ajouter aux données stockées dans la base de données (330), lesdites transactions étant réalisées au moyen du fichier WAL (340) et du fichier index WAL (350), et
en réaction à l'identification du fait que le fichier WAL (340) est dans un deuxième état différent du premier état et qui ne permet pas la lecture des données présentes dans le fichier WAL, réaliser les transactions, compte tenu d'un deuxième mode de fonctionnement de la base de données (330) reposant sur un schéma de roll-back.

2. Appareil électronique (101) selon la revendication 1, dans lequel la pluralité d'instructions, lorsqu'elles sont exécutées, amènent l'au moins un processeur (120) à limiter l'exécution de transactions en lien avec l'opération de modification des données, l'opération d'effacement des données et l'opération d'ajout des données en réaction à l'identification du fait que le fichier index WAL (350) est dans un deuxième état qui ne permet pas la modification du fichier index WAL.

3. Appareil électronique (101) selon la revendication 2, dans lequel la pluralité d'instructions, lorsqu'elles sont exécutées, amènent l'au moins un processeur (120) à ajouter, à une certaine partie de la mémoire (130), des informations indiquant que l'exécution de transactions en lien avec des opérations autres que l'opération de lecture des données est limitée en réaction à l'identification du fait que le fichier index WAL (350) est dans le deuxième état.

4. Appareil électronique (101) selon la revendication 3, dans lequel la pluralité d'instructions, lorsqu'elles sont exécutées, amènent l'au moins un processeur (120) à :
en réaction à l'ajout des informations à ladite certaine partie, réaliser des transactions en lien avec l'opération de lecture des données, et
une fois l'exécution de la transaction en lien avec l'opération de lecture des données terminée, supprimer les informations ajoutées à ladite partie.

5. Appareil électronique (101) selon l'une quelconque des revendications précédentes,
dans lequel le fichier WAL (340) comprend des données de la base de données (330), qui sont modifiées sous l'effet de la transaction, et
dans lequel le fichier index WAL (350) comprend des informations indiquant l'emplacement auquel les données stockées dans le fichier WAL (340) doivent être stockées dans le dispositif de stockage.

6. Appareil électronique (101) selon la revendication 5,
dans lequel la pluralité d'instructions, lorsqu'elles sont exécutées, amènent l'au moins un processeur (120) à produire le fichier index WAL (350) dans la mémoire en réaction à l'identification du fait que le fichier index WAL (350) est dans le deuxième état, et
dans lequel le fichier index WAL (350) est produit dans une partie de la mémoire en lien avec une application destinée au traitement de données dans la base de données (330), pendant que l'application est exécutée par l'au moins un processeur (120).

7. Appareil électronique (101) selon l'une quelconque des revendications précédentes, dans lequel la pluralité d'instructions, lorsqu'elles sont exécutées, amènent l'au moins un processeur (120) à :
en réaction à l'identification du fait que le fichier WAL (340) n'est pas stocké dans le dispositif de stockage, identifier le mode de fonctionnement de la base de données (330) ;
en réaction à l'identification du fait que le mode de fonctionnement correspond au premier mode de fonctionnement dans lequel fonctionne la base de données (330), compte tenu du fichier WAL (340) et du fichier index WAL (350), produire le fichier WAL (340) dans le dispositif de stockage ; et
en réaction à l'identification du fait que le fichier WAL (340) ne parvient pas à être produit, faire passer le mode de fonctionnement de la base de données (330) du premier mode de fonctionnement au deuxième mode de fonctionnement, différent du premier mode de fonctionnement ;
ledit premier mode de fonctionnement reposant sur le schéma WAL et ledit deuxième mode de fonctionnement reposant sur le schéma de roll-back.

8. Appareil électronique (101) selon la revendication 7, dans lequel la pluralité d'instructions, lorsqu'elles sont exécutées, amènent l'au moins un processeur (120) à :
en réaction à l'identification du fait que le fichier WAL (340) ne parvient pas à être produit, obtenir des informations visant à modifier la base de données (330) stockée dans le dispositif de stockage ;
en réaction à l'obtention des informations, faire passer le mode de fonctionnement de la base de données (330) du premier mode de fonctionnement au deuxième mode de fonctionnement ; et
réaliser une synchronisation de la base de données (330) stockée dans le dispositif de stockage, compte tenu du deuxième mode de fonctionnement.

9. Procédé de fonctionnement d'un appareil électronique, le procédé comprenant :
l'identification (1310) d'une application utilisant une base de données stockée dans un dispositif de stockage de l'appareil électronique,
en réaction à l'identification de l'application, l'identification (1320 ; 610) de l'état d'un fichier WAL (Write-Ahead Logging) destiné à contenir au moins temporairement des données modifiées correspondant à des données stockées dans la base de données,
en réaction à l'identification du fait que l'état du fichier WAL correspond à un état permettant la modification du fichier WAL (620 : OUI), l'identification (1320 ; 640) de l'état d'un fichier index WAL destiné à contenir des informations indiquant une partie de la base de données présente dans le dispositif de stockage et dans laquelle des données du fichier WAL doivent être stockées ;
en réaction à l'identification du fait que l'état du fichier index WAL correspond à un premier état qui ne permet pas la modification du fichier index WAL (1330 : OUI ; 640 :
OUI), l'exécution (1340, 650) d'une opération de lecture eu égard à des données en lien avec l'application, compte tenu d'un verrouillage de fichier indiquant que la base de données a été ouverte ou activée de manière à permettre uniquement la réalisation d'une opération de lecture ; et
en réaction à l'identification du fait que l'état du fichier index WAL correspond à un deuxième état qui permet la modification du fichier index WAL (1330 : NON), l'exécution (1350) d'une opération visant à traiter les données, compte tenu de l'application, au moyen du fichier WAL et du fichier index WAL.

10. Procédé selon la revendication 9, comprenant en outre :
le stockage, dans la base de données présente dans le dispositif de stockage, du résultat stocké dans le fichier WAL, compte tenu de la taille du fichier WAL et d'un certain seuil.

11. Procédé selon l'une quelconque des revendications 9 et 10,
dans lequel l'exécution de l'opération de lecture, compte tenu des informations, comprend :
l'ajout, à une certaine zone de la mémoire, d'un paramètre correspondant aux informations indiquant que l'opération de lecture est réalisée, et
en réaction à l'ajout du paramètre, l'exécution de l'opération de lecture ; et
ledit paramètre ajouté indiquant que la base de données a été activée de façon à limiter l'exécution d'opérations de traitement autres que l'opération de lecture.

12. Procédé selon l'une quelconque des revendications 9 à 11, dans lequel l'exécution de l'opération de lecture, compte tenu des informations, comprend :
l'identification d'un changement d'état du fichier index WAL lorsque l'état du fichier index WAL correspondant au premier état est identifié, et
en réaction à l'identification du fait que l'état du fichier index WAL a changé du premier état au deuxième état, l'exécution de l'opération de traitement des données, compte tenu de l'application, au moyen du fichier WAL et du fichier index WAL.

13. Procédé selon l'une quelconque des revendications 9 à 12, comprenant en outre :
en réaction à l'identification du fait que l'état du fichier WAL correspond à l'état,
l'identification d'une partie en lien avec l'application dans la mémoire, et
la production du fichier WAL dans ladite partie de la mémoire.

14. Procédé selon l'une quelconque des revendications 9 à 13, comprenant en outre :
le stockage d'un résultat de l'exécution de l'opération de traitement des données de la base de données présente dans le fichier index WAL en réaction à l'identification du fait que l'état du fichier index WAL correspond au deuxième état.
